(19) **Europäisches Patentamt / European Patent Office / Office européen des brevets**

(11) **EP 4 451 728 A1**

(12) # EUROPEAN PATENT APPLICATION
published in accordance with Art. 153(4) EPC

(43) Date of publication:
**23.10.2024 Bulletin 2024/43**

(21) Application number: **23742739.8**

(22) Date of filing: **09.01.2023**

(51) International Patent Classification (IPC):
**H04W 24/02** *(2009.01)*

(52) Cooperative Patent Classification (CPC):
**H04W 24/02; H04W 28/26; H04W 72/02;
H04W 72/0446; H04W 72/50; H04W 76/28;
Y02D 30/70**

(86) International application number:
**PCT/CN2023/071219**

(87) International publication number:
**WO 2023/138424 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.01.2022 CN 202210074775**

(71) Applicant: **Huawei Technologies Co., Ltd.
Shenzhen, Guangdong 518129 (CN)**

(72) Inventors:
• **SHEN, Zhongyi**
  **Shenzhen, Guangdong 518129 (CN)**
• **HAN, Jing**
  **Shenzhen, Guangdong 518129 (CN)**
• **ZHANG, Li**
  **Shenzhen, Guangdong 518129 (CN)**
• **LI, Hong**
  **Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **INTER-FREQUENCY MEASUREMENT RESOURCE AND/OR TIME DETERMINATION METHOD AND APPARATUS**

(57) This application provides an inter-frequency measurement resource and/or time determining method and an apparatus. When a length of each idle time domain resource is greater than or equal to a first threshold, or when a cycle of discontinuous reception configured by a network device is greater than or equal to a second threshold, a terminal device uses a part of the idle time domain resource as a first resource that is in the idle time domain resource and that can be used to perform inter-frequency measurement. The terminal device determines, based on the first resource in each idle time domain resource, a resource and/or time used to perform the inter-frequency measurement. When each idle time domain resource or the cycle of the discontinuous reception is long, the terminal device uses a part of the idle time domain resource as the first resource that can be used to perform the inter-frequency measurement, so that a resource needed for synchronization with a serving cell is reserved in the idle time domain resource, to implement synchronization with the serving cell. This helps improve accuracy of data receiving and sending.

FIG. 5

## Description

This application claims priority to Chinese Patent Application No. 202210074775.8, filed with the China National Intellectual Property Administration on January 21, 2022 and entitled "INTER-FREQUENCY MEASUREMENT RESOURCE AND/OR TIME DETERMINING METHOD AND APPARATUS", which is incorporated herein by reference in its entirety.

## TECHNICAL FIELD

This application relates to the field of communication technologies, and in particular, to an inter-frequency measurement resource and/or time determining method and an apparatus.

## BACKGROUND

In a new radio (new radio, NR) system, measurement performed by user equipment (user equipment, UE) on a neighboring cell includes intra-frequency measurement and inter-frequency measurement. The inter-frequency measurement means that UE measures a neighboring cell having a different frequency from that of a serving cell. When performing the inter-frequency measurement, the UE needs to switch a frequency to a target frequency. Therefore, data cannot be received or sent in the current serving cell. Because a measurement gap (gap) is not introduced in neighboring cell measurement performed by UE in narrowband internet of things (narrowband internet of things, NB-IoT) in connected mode, the UE needs to perform inter-frequency measurement by using an idle time domain resource that does not affect data receiving and sending.

However, when an idle time domain resource is very long, time spent by the UE on the inter-frequency measurement is also long, which may cause inaccurate time synchronization of the serving cell, thereby affecting accuracy of data receiving and sending.

## SUMMARY

Embodiments of this application provide an inter-frequency measurement resource and/or time determining method and an apparatus, to improve accuracy of data receiving and sending.

According to a first aspect, an embodiment of this application provides an inter-frequency measurement resource and/or time determining method. In the method, when a length of each idle time domain resource is greater than or equal to a first threshold, or when a cycle of discontinuous reception configured by a network device is greater than or equal to a second threshold, a terminal device uses a part of the idle time domain resource as a first resource that is in the idle time domain resource and that can be used to perform inter-frequency measurement. The terminal device determines, based on the first resource in each idle time domain resource, a resource and/or time used to perform the inter-frequency measurement. The idle time domain resource is a time domain resource other than a time domain resource used for data receiving and sending and physical downlink control channel monitoring and a time domain resource corresponding to time T, where T includes inherent processing time and frequency switching time of the terminal device. T is a real number greater than or equal to 0.

It can be learned that when each idle time domain resource or the cycle of the discontinuous reception is long, the terminal device uses a part of the idle time domain resource as the first resource that can be used to perform the inter-frequency measurement, so that a resource needed for synchronization with a serving cell is reserved in the idle time domain resource, to synchronize with the serving cell. This helps improve accuracy of data receiving and sending.

In addition, in comparison with a manner in which the terminal device directly determines, based on each idle time domain resource, the resource and/or the time used to perform the inter-frequency measurement, in a manner in which the terminal device determines, based on the first resource in each idle time domain resource, the resource and/or the time used to perform the inter-frequency measurement, so that accuracy of the determined resource and/or time used to perform the inter-frequency measurement can be improved.

In an optional implementation, a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

It can be learned that when the range that covers the length of the idle time domain resource changes or the range that covers the cycle of the discontinuous reception changes, the length of the second resource that is in the idle time domain resource and that is not used to perform the inter-frequency measurement changes. Therefore, a length of the first resource determined by the terminal device based on the idle time domain resource and the second resource also changes.

In another optional implementation, a proportion of a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

It can be learned that when the range that covers the length of the idle time domain resource changes or the range that covers the cycle of the discontinuous reception changes, the proportion of the second resource that is in the idle time domain resource and that is not used to perform the inter-frequency measurement also changes. Therefore, a length of the first resource determined by the terminal device based on the idle time domain resource and the second resource also changes.

In the foregoing two implementations, the terminal device can flexibly determine, based on the length of the idle time domain resource or the cycle of the discontinuous reception, a length of the resource that is in the idle time domain resource and that can be used to perform the inter-frequency measurement.

In an optional implementation, when the length of the idle time domain resource is less than the first threshold, or when the cycle of the discontinuous reception is less than the second threshold, the terminal device determines all of the idle time domain resource as the first resource that is in the idle time domain resource and that can be used to perform the inter-frequency measurement.

In other words, when the length of each idle time domain resource or the cycle of the discontinuous reception does not exceed a specific range, it indicates that the terminal device still maintains synchronization with the serving cell, and does not need to synchronize with the serving cell in advance, and the terminal device does not need to reserve, in the idle time domain resource, a time domain resource for synchronization with the serving cell. Therefore, the terminal device uses all of the idle time domain resource as the first resource that can be used to perform the inter-frequency measurement, so that the terminal device fully uses all of the idle time domain resource to perform the inter-frequency measurement.

In an optional implementation, that the terminal device determines, based on the first resource in each idle time domain resource, a resource and/or time used to perform the inter-frequency measurement includes: The terminal device determines, based on a quantity of reference signals needed to perform the inter-frequency measurement and a quantity of reference signals included in the first resource in each idle time domain resource, the resource and/or the time used to perform the inter-frequency measurement. Alternatively, the terminal device determines, based on measurement time needed to perform the inter-frequency measurement and the first resource in each idle time domain resource, the resource and/or the time used to perform the inter-frequency measurement.

It can be learned that the terminal device determines, from the first resource in each idle time domain resource based on the quantity of reference signals needed to perform the inter-frequency measurement or based on the measurement time needed to perform the inter-frequency measurement, the resource and/or the time actually needed to perform the inter-frequency measurement, and the resource and/or the time actually needed to perform the inter-frequency measurement is determined by considering a resource and/or time that may be used by the terminal device to perform synchronization with the serving cell in advance. Therefore, the determined resource and/or time actually needed to perform the inter-frequency measurement is accurate. In this way, accuracy of data receiving and sending can be improved.

In an optional implementation, when an interval between two adjacent reference signals in the resource and/or the time used to perform the inter-frequency measurement is greater than or equal to a third threshold, the terminal device determines to restart the inter-frequency measurement; or when an interval between two adjacent idle time domain resources in the resource and/or the time used to perform the inter-frequency measurement is greater than or equal to the third threshold, the terminal device determines to restart the inter-frequency measurement.

The restarting the inter-frequency measurement includes but is not limited to one or more of the following operations: discarding a previous measurement result, performing filtering without using the previous measurement result, recalculating a resource and/or time used to perform the inter-frequency measurement, or restarting the inter-frequency measurement of a neighboring cell.

The terminal device cannot store the previous measurement result for long time, or the previous measurement result lacks timeliness, in other words, the previous measurement result cannot be used. Therefore, when the interval between two adjacent reference signals in the resource and/or the time used to perform the inter-frequency measurement is greater than or equal to the third threshold, or when the interval between two adjacent idle time domain resources in the resource and/or the time used to perform the inter-frequency measurement is greater than or equal to the third threshold, the terminal device determines to restart the inter-frequency measurement, and discards the previous measurement result, to ensure real-time performance of the measurement result.

In an optional implementation, after determining to restart the inter-frequency measurement, the terminal device recalculates, starting from a latter reference signal or a latter resource, a resource and/or time used to perform the inter-frequency measurement. Then, the terminal device restarts, by using the re-determined resource and/or time and starting from the latter reference signal or the latter resource, the inter-frequency measurement, to ensure the real-time performance of the measurement result.

According to a second aspect, this application further provides an inter-frequency measurement resource and/or time determining method. In the method, a terminal device determines, based on each idle time domain resource and a quantity of reference signals or measurement time needed to perform inter-frequency measurement, a third resource needed to perform the inter-frequency measurement. When one or more idle time domain resources whose lengths are greater than or equal to a first threshold exist in the third resource, or when a cycle of discontinuous reception configured by a network device is greater than or equal to a second threshold, the terminal device determines a fourth resource and/or fourth time needed to perform the inter-frequency measurement. The fourth resource and/or the fourth time are/is equal to a resource and/or time corresponding to a time domain resource obtained by multiplying the third resource by a preset proportion. The idle time domain resource is a time domain resource other than a time domain resource used for data receiving and sending and physical downlink control channel monitoring and a time domain resource corresponding to time T, where T includes inherent processing time and frequency switching time of the terminal device.

It can be learned that the terminal device first determines, based on each idle time domain resource, the third resource needed by the terminal device to perform the inter-frequency measurement. Then, when one or more idle time domain resources whose lengths are greater than or equal to the first threshold exist in the third resource, or when the cycle of the discontinuous reception configured by the network device is greater than or equal to the second threshold, the terminal device extends the third resource by the preset proportion, to obtain the fourth resource and/or the fourth time needed to perform the inter-frequency measurement. In this way, the terminal device can reserve, from the third resource, a resource needed for synchronization with a serving cell, to synchronize with the serving cell. This helps improve accuracy of data receiving and sending. In addition, the fourth resource and/or the fourth time that are/is needed for the inter-frequency measurement and that are/is determined by the terminal device are/is also more accurate.

In an optional implementation, the preset proportion is related to a range that covers a length of a longest idle time domain resource in the third resource, or is related to a range that covers the cycle of the discontinuous reception.

It can be learned that the terminal device may flexibly extend the third resource by different proportions based on the range that covers the length of the longest idle time domain resource in the third resource or the range that covers the cycle of the discontinuous reception, to obtain the fourth resource and/or the fourth time needed to perform the inter-frequency measurement.

In an optional implementation, when a length of each idle time domain resource in the third resource is less than the first threshold, or when the cycle of the discontinuous reception is less than the second threshold, the terminal device may further determine the third resource as the fourth resource and/or the fourth time.

In other words, when the length of each idle time domain resource in the third resource or the cycle of the discontinuous reception is less than or equal to a specific range, it indicates that the terminal device still maintains synchronization with the serving cell, and does not need to synchronize with the serving cell in advance. Therefore, the terminal device directly uses the third resource as the fourth resource and/or the fourth time needed to perform the inter-frequency measurement, to fully use the third resource.

In an optional implementation, when an interval between two adjacent reference signals in the fourth resource and/or the fourth time is greater than or equal to a third threshold, the terminal device determines to restart the inter-frequency measurement; or when an interval between two adjacent idle time domain resources in the fourth resource and/or the fourth time is greater than or equal to the third threshold, the terminal device determines to restart the inter-frequency measurement.

The restarting the inter-frequency measurement includes but is not limited to one or more of the following operations: discarding a previous measurement result, performing filtering without using the previous measurement result, recalculating a resource and/or time used to perform the inter-frequency measurement, or restarting the inter-frequency measurement of a neighboring cell.

The terminal device cannot store the previous measurement result for long time, or the previous measurement result lacks timeliness, in other words, the previous measurement result cannot be used. Therefore, when the interval between two adjacent reference signals in the fourth resource and/or the fourth time is greater than or equal to the third threshold, or when the interval between two adjacent idle time domain resources in the fourth resource and/or the fourth time is greater than or equal to the third threshold, the terminal device determines to restart the inter-frequency measurement, and discards the previous measurement result, to ensure real-time performance of the measurement result.

In an optional implementation, after determining to restart the inter-frequency measurement, the terminal device recalculates, starting from a latter reference signal or a latter resource, a resource and/or time used to perform the inter-frequency measurement. Then, the terminal device restarts, by using the re-determined resource and/or time and starting from the latter reference signal or the latter resource, the inter-frequency measurement, to ensure the real-time performance of the measurement result.

According to a third aspect, this application further provides an inter-frequency measurement resource and/or time determining method. The inter-frequency measurement resource and/or time determining method in this aspect corresponds to the inter-frequency measurement resource and/or time determining method in the first aspect, and the inter-frequency measurement resource and/or time determining method in this aspect is described from a network device side. In the method, for each idle time domain resource of a terminal device, when a length of the idle time domain resource is greater than or equal to a first threshold, or when a cycle of discontinuous reception configured by a network device is greater than or equal to a second threshold, the network device uses a part of the idle time domain resource as a first resource that is in the idle time domain resource and can be used by the terminal device to perform inter-frequency measurement. The network device determines, based on the first resource in each idle time domain resource, a resource and/or time used by the terminal device to perform the inter-frequency measurement. The idle time domain resource is a time domain resource other than a time domain resource used for data receiving and sending and physical downlink control channel monitoring and a time domain resource corresponding to time T, where T includes inherent processing time and frequency switching time of the terminal device.

It can be learned that when each idle time domain resource of the terminal device or the cycle of the discontinuous reception is long, the network device uses a part of the idle time domain resource as the first resource that can be used by the terminal device to perform the inter-frequency measurement, so that a resource needed by the terminal device to perform synchronization with a serving cell is reserved in the idle time domain resource. Therefore, the network device can accurately determine, based on the resource and/or the time used by the terminal device to perform the inter-frequency measurement, end time of the inter-frequency measurement performed by the terminal device. In this way, the network device can configure a proper signal threshold of the serving cell for the terminal device based on the end resource time of the inter-frequency measurement performed by the terminal device, to shorten time spent by the terminal device on cell re-establishment.

In an optional implementation, a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

It can be learned that when the range that covers the length of the idle time domain resource changes or the range that covers the cycle of the discontinuous reception changes, a length of the second resource that is in the idle time domain resource and that is not used to perform the inter-frequency measurement changes. Therefore, a length of the first resource determined by the network device based on the idle time domain resource and the second resource also changes.

In an optional implementation, a proportion of a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

It can be learned that when the range that covers the length of the idle time domain resource changes or the range that covers the cycle of the discontinuous reception changes, the proportion of the second resource that is in the idle time domain resource and that is not used to perform the inter-frequency measurement also changes. Therefore, a length of the first resource determined by the network device based on the idle time domain resource and the second resource also changes.

In the foregoing two implementations, the network device can flexibly determine, based on the length of the idle time domain resource or the cycle of the discontinuous reception, a length of the resource that is in the idle time domain resource and that can be used to perform the inter-frequency measurement.

In an optional implementation, when the length of the idle time domain resource is less than the first threshold, or when the cycle of the discontinuous reception is less than the second threshold, the network device may further determine all of the idle time domain resource as the first resource that is in the idle time domain resource and that can be used by the terminal device to perform the inter-frequency measurement.

In other words, when the length of each idle time domain resource or the cycle of the discontinuous reception does not exceed a specific range, it indicates that the terminal device still maintains synchronization with the serving cell, and does not need to perform synchronization with the serving cell in advance. Therefore, the network device uses all of the idle time domain resource as the first resource that can be used by the terminal device to perform the inter-frequency measurement.

In an optional implementation, that the network device determines, based on the first resource in each idle time domain resource, a resource and/or time used by the terminal device to perform the inter-frequency measurement includes: The network device determines, based on a quantity of reference signals needed by the terminal device to perform the inter-frequency measurement and a quantity of reference signals included in the first resource in each idle time domain resource, the resource and/or the time used by the terminal device to perform the inter-frequency measurement. Alternatively, the network device determines, based on measurement time needed by the terminal device to perform the inter-frequency measurement and the first resource in each idle time domain resource, the resource and/or the time used by the terminal device to perform the inter-frequency measurement.

It can be learned that the network device determines, from the first resource in each idle time domain resource based on the quantity of reference signals needed by the terminal device to perform the inter-frequency measurement or based on the measurement time needed by the terminal device to perform the inter-frequency measurement, the resource and/or the time actually needed by the terminal device to perform the inter-frequency measurement, and the resource and/or the time actually needed to perform the inter-frequency measurement is determined by considering a resource and/or time that may be used by the terminal device to perform synchronization with the serving cell in advance. Therefore, the resource and/or the time that are/is determined by the network device and that are/is actually needed by the terminal device to perform the inter-frequency measurement is accurate. In this way, accuracy of the signal threshold of a neighboring cell configured by the network device for the terminal device can be improved.

In an optional implementation, when an interval between two adjacent reference signals in the resource and/or the time used by the terminal device to perform the inter-frequency measurement is greater than or equal to a third threshold, the network device may further determine that the terminal device restarts the inter-frequency measurement; or when an interval between two adjacent idle time domain resources in the resource and/or the time used by the terminal device to perform inter-frequency measurement is greater than or equal to the third threshold, the network device determines that the terminal device restarts the inter-frequency measurement.

The restarting the inter-frequency measurement includes but is not limited to one or more of the following operations: discarding a previous measurement result, performing filtering without using the previous measurement result, recalculating a resource and/or time used to perform the inter-frequency measurement, or restarting the inter-frequency measurement of a neighboring cell.

The terminal device cannot store the previous measurement result for long time, or the previous measurement result lacks timeliness, in other words, the previous measurement result cannot be used. Therefore, when the interval between two adjacent reference signals in the resource and/or the time used by the terminal device to perform the inter-frequency measurement is greater than or equal to the third threshold, or when the interval between two adjacent idle time domain resources in the resource and/or the time used by the terminal device to perform the inter-frequency measurement is greater than or equal to the third threshold, the network device determines that the terminal device restarts the inter-frequency measurement, to more accurately determine the resource and/or the time used by the terminal device to perform the inter-frequency measurement.

In an optional implementation, after determining that the terminal device restarts the inter-frequency measurement, the network device recalculates, starting from a latter reference signal or a latter resource, a resource and/or time used by the terminal device to perform the inter-frequency measurement. Therefore, the network device accurately determines, based on the resource and/or the time that are/is used by the terminal device to perform the inter-frequency measurement and that are/is obtained through recalculation, the end time of the inter-frequency measurement performed by the terminal device. In this way, the network device can more accurately configure the proper signal threshold of the serving cell for the terminal device, to shorten the time spent by the terminal device on the cell re-establishment.

According to a fourth aspect, this application further provides an inter-frequency measurement resource and/or time determining method. The inter-frequency measurement resource and/or time determining method in this aspect corresponds to the inter-frequency measurement resource and/or time determining method in the second aspect. The inter-frequency measurement resource and/or time determining method in this aspect is described from a network device side. In the method, a network device determines, based on each idle time domain resource of a terminal device and a quantity of reference signals or measurement time needed by the terminal device to perform inter-frequency measurement, a third resource needed by the terminal device to perform the inter-frequency measurement. When one or more idle time domain resources whose lengths are greater than or equal to a first threshold exist in the third resource, or when a cycle of discontinuous reception configured by the network device is greater than or equal to a second threshold, the network device determines a fourth resource and/or fourth time needed by the terminal device to perform the inter-frequency measurement, where the fourth resource and/or the fourth time are/is equal to a resource and/or time corresponding to a time domain resource obtained by multiplying the third resource by a preset proportion. The idle time domain resource is a time domain resource other than a time domain resource used for data receiving and sending and physical downlink control channel monitoring and a time domain resource corresponding to time T, where T includes inherent processing time and frequency switching time of the terminal device.

It can be learned that the network device first determines, based on each idle time domain resource, the third resource needed by the terminal device to perform the inter-frequency measurement. Then, when one or more idle time domain resources whose lengths are greater than or equal to the first threshold exist in the third resource, or when the cycle of the discontinuous reception configured by the network device is greater than or equal to the second threshold, the network device extends the third resource by the preset proportion, to obtain the fourth resource and/or the fourth time needed by the terminal device to perform the inter-frequency measurement. In this way, the network device can reserve, from the third resource, a resource needed by the terminal device to perform synchronization with a serving cell. Therefore, the network device can accurately determine, based on the fourth resource and/or the fourth time needed by the terminal device to perform the inter-frequency measurement, end time of the inter-frequency measurement performed by the terminal device. In this way, the network device can configure a proper signal threshold of the serving cell for the terminal device based on the end time of the inter-frequency measurement performed by the terminal device, to shorten time spent by the terminal device on cell re-establishment.

In an optional implementation, the preset proportion is related to a range that covers a length of a longest idle time domain resource in the third resource, or is related to a range that covers the cycle of the discontinuous reception.

It can be learned that the network device may flexibly extend the third resource by different proportions based on the range that covers the length of the longest idle time domain resource in the third resource or the range that covers the cycle of the discontinuous reception, to obtain the fourth resource and/or the fourth time needed by the terminal device to perform the inter-frequency measurement.

In an optional implementation, when a length of each idle time domain resource in the third resource is less than the first threshold, or when the cycle of the discontinuous reception is less than the second threshold, the network device may further determine the third resource as the fourth resource and/or the fourth time.

In other words, when the length of each idle time domain resource in the third resource or the cycle of the discontinuous reception is less than or equal to a specific range, it indicates that the terminal device still maintains synchronization with the serving cell, and does not need to synchronize with the serving cell in advance. Therefore, the network device directly uses the third resource as the fourth resource and/or the fourth time needed by the terminal device to perform the inter-frequency measurement, to improve accuracy of the signal threshold of a neighboring cell configured by the network device for the terminal device.

In an optional implementation, when an interval between two adjacent reference signals in the fourth resource and/or the fourth time is greater than or equal to a third threshold, the network device may further determine that the terminal device restarts the inter-frequency measurement; or when an interval between two adjacent idle time domain resources in the fourth resource and/or the fourth time is greater than or equal to the third threshold, the network device determines that the terminal device restarts the inter-frequency measurement.

The restarting the inter-frequency measurement includes but is not limited to one or more of the following operations: discarding a previous measurement result, performing filtering without using the previous measurement result, recalculating a resource and/or time used to perform the inter-frequency measurement, or restarting the inter-frequency measurement of a neighboring cell.

The terminal device cannot store the previous measurement result for long time, or the previous measurement result lacks timeliness, in other words, the previous measurement result cannot be used. Therefore, when the interval between two adjacent reference signals in the fourth resource and/or the fourth time is greater than or equal to the third threshold, or when the interval between two adjacent idle time domain resources in the fourth resource and/or the fourth time is greater than or equal to the third threshold, the network device determines that the terminal device restarts the inter-frequency measurement.

The restarting the inter-frequency measurement includes but is not limited to one or more of the following operations: discarding a previous measurement result, performing filtering without using the previous measurement result, recalculating a resource and/or time used to perform the inter-frequency measurement, or restarting the inter-frequency measurement of a neighboring cell.

In an optional implementation, after determining that the terminal device restarts the inter-frequency measurement, the network device recalculates, starting from a latter reference signal or a latter resource, a resource and/or time used by the terminal device to perform the inter-frequency measurement. Therefore, the network device accurately determines, based on the resource and/or the time that are/is used by the terminal device to perform the inter-frequency measurement and that are/is obtained through recalculation, the end time of the inter-frequency measurement performed by the terminal device. In this way, the network device can more accurately configure the proper signal threshold of the serving cell for the terminal device, to shorten the time spent by the terminal device on the cell re-establishment.

According to a fifth aspect, an embodiment of this application further provides an inter-frequency measurement resource and/or time determining method. In the method, when an interval between two adjacent reference signals in a resource and/or time used to perform inter-frequency measurement is greater than or equal to a third threshold, or when an interval between two adjacent idle time domain resources in the resource and/or the time used to perform the inter-frequency measurement is greater than or equal to the third threshold, the terminal device determines to restart the inter-frequency measurement. The terminal device re-determines, starting from a latter reference signal or a latter resource, a resource and/or time used to perform the inter-frequency measurement.

The restarting the inter-frequency measurement includes but is not limited to one or more of the following operations: discarding a previous measurement result, performing filtering without using the previous measurement result, recalculating a resource and/or time used to perform the inter-frequency measurement, or restarting the inter-frequency measurement of a neighboring cell.

The terminal device cannot store the previous measurement result for long time, or the previous measurement result lacks timeliness, in other words, the previous measurement result cannot be used. Therefore, when the interval between two adjacent reference signals in the resource and/or the time used to perform the inter-frequency measurement is greater than or equal to the third threshold, or when the interval between two adjacent idle time domain resources in the resource and/or the time used to perform the inter-frequency measurement is greater than or equal to the third threshold, the terminal device determines to restart the inter-frequency measurement. The terminal device re-determines, starting from a latter reference signal or a latter resource, a resource and/or time used to perform the inter-frequency measurement, to ensure accuracy of the resource and/or the time used to perform the inter-frequency measurement. In this way, the terminal device can restart, by using the re-determined resource and/or time and starting from the latter reference signal or the latter resource, the inter-frequency measurement, to ensure real-time performance of a measurement result.

According to a sixth aspect, an embodiment of this application further provides an inter-frequency measurement resource and/or time determining method. The inter-frequency measurement resource and/or time determining method in this aspect corresponds to the inter-frequency measurement resource and/or time determining method in the fifth aspect, and the inter-frequency measurement resource and/or time determining method in this aspect is described from a network device side. In the method, when an interval between two adjacent reference signals in a resource and/or time used by a terminal device to perform inter-frequency measurement is greater than or equal to a third threshold, or when an interval between two adjacent idle time domain resources in the resource and/or the time used by the terminal device to perform the inter-frequency measurement is greater than or equal to the third threshold, a network device determines that the terminal device restarts the inter-frequency measurement. The network device re-determines, starting from a latter reference signal or a latter resource, a resource and/or time used by the terminal device to perform the inter-frequency measurement.

The restarting the inter-frequency measurement includes but is not limited to one or more of the following operations: discarding a previous measurement result, performing filtering without using the previous measurement result, recalculating a resource and/or time used to perform the inter-frequency measurement, or restarting the inter-frequency measurement of a neighboring cell.

The terminal device cannot store the previous measurement result for long time, or the previous measurement result lacks timeliness, in other words, the previous measurement result cannot be used. Therefore, when the interval between two adjacent reference signals in the resource and/or the time used by the terminal device to perform the inter-frequency measurement is greater than or equal to the third threshold, or when the interval between two adjacent idle time domain resources in the resource and/or the time used by the terminal device to perform the inter-frequency measurement is greater than or equal to the third threshold, the network device determines that the terminal device restarts the inter-frequency measurement. The terminal device re-determines, starting from a latter reference signal or a latter resource, a resource and/or time used by the terminal device to perform the inter-frequency measurement, to ensure accuracy of the resource and/or the time used by the terminal device to perform the inter-frequency measurement. Therefore, the network device can accurately determine, based on the resource and/or the time used by the terminal device to perform the inter-frequency measurement, end time of the inter-frequency measurement performed by the terminal device. In this way, the network device can configure a proper signal threshold of a serving cell for the terminal device based on the end resource time of the inter-frequency measurement performed by the terminal device, to shorten time spent by the terminal device on cell re-establishment.

According to a seventh aspect, this application further provides a communication apparatus. The communication apparatus has some or all functions of the terminal device according to the first aspect, or has some or all functions of the terminal device according to the second aspect, or has some or all functions of the network device according to the third aspect, or has some or all functions of the network device according to the fourth aspect, or has some or all functions of the terminal device according to the fifth aspect, or has some or all functions of the network device according to the sixth aspect. For example, a function of the communication apparatus may have a function of some or all of the embodiments of the terminal device according to the first aspect of this application, or may have a function that independently implements any embodiment of this application. The function may be implemented by hardware, or may be implemented by hardware executing corresponding software. The hardware or the software includes one or more units or modules corresponding to the foregoing functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and store program instructions and data that are necessary for the communication apparatus.

In an implementation, the communication apparatus includes the processing unit and the communication unit. The communication unit is configured to receive and send data/signaling.

The processing unit is configured to: when a length of each idle time domain resource is greater than or equal to a first threshold, or when a cycle of discontinuous reception configured by a network device is greater than or equal to a second threshold, use a part of the idle time domain resource as a first resource that is in the idle time domain resource and that can be used to perform inter-frequency measurement.

The processing unit is further configured to determine, based on the first resource in each idle time domain resource, a resource and/or time used to perform the inter-frequency measurement.

The idle time domain resource is a time domain resource other than a time domain resource used for data receiving and sending and physical downlink control channel monitoring and a time domain resource corresponding to time T, where T includes inherent processing time and frequency switching time of the terminal device.

In addition, for another optional implementation of the communication apparatus in this aspect, refer to related content of the first aspect. Details are not described herein again.

In another implementation, the communication apparatus includes the processing unit and the communication unit. The communication unit is configured to receive and send data/signaling.

The processing unit is configured to determine, based on each idle time domain resource and a quantity of reference signals or measurement time needed to perform inter-frequency measurement, a third resource needed to perform the inter-frequency measurement.

The processing unit is further configured to: when one or more idle time domain resources whose lengths are greater than or equal to a first threshold exist in the third resource, or when a cycle of discontinuous reception configured by a network device is greater than or equal to a second threshold, determine a fourth resource and/or fourth time needed to perform the inter-frequency measurement, where the fourth resource and/or the fourth time are/is equal to a resource and/or time corresponding to a time domain resource obtained by multiplying the third resource by a preset proportion.

The idle time domain resource is a time domain resource other than a time domain resource used for data receiving and sending and physical downlink control channel monitoring and a time domain resource corresponding to time T, where T includes inherent processing time and frequency switching time of the terminal device.

In addition, for another optional implementation of the communication apparatus in this aspect, refer to related content of the second aspect. Details are not described herein again.

In still another implementation, the communication apparatus includes the processing unit and the communication unit. The communication unit is configured to receive and send data/signaling.

The processing unit is configured to: for each idle time domain resource of the terminal device, when a length of the idle time domain resource is greater than or equal to a first threshold, or when a cycle of discontinuous reception configured by a network device is greater than or equal to a second threshold, use a part of the idle time domain resource as a first resource that is in the idle time domain resource and that can be used by the terminal device to perform inter-frequency measurement.

The processing unit is further configured to determine, based on the first resource in each idle time domain resource, a resource and/or time used by the terminal device to perform the inter-frequency measurement.

The idle time domain resource is a time domain resource other than a time domain resource used for data receiving and sending and physical downlink control channel monitoring and a time domain resource corresponding to time T, where T includes inherent processing time and frequency switching time of the terminal device.

In addition, for another optional implementation of the communication apparatus in this aspect, refer to related content of the third aspect. Details are not described herein again.

In still another implementation, the communication apparatus includes the processing unit and the communication unit. The communication unit is configured to receive and send data/signaling.

The processing unit is configured to determine, based on each idle time domain resource of the terminal device and a quantity of reference signals or measurement time needed by the terminal device to perform inter-frequency measurement, a third resource needed by the terminal device to perform the inter-frequency measurement.

The processing unit is further configured to: when one or more idle time domain resources whose lengths are greater than or equal to a first threshold exist in the third resource, or when a cycle of discontinuous reception configured by a network device is greater than or equal to a second threshold, determine a fourth resource and/or fourth time needed by the terminal device to perform the inter-frequency measurement, where the fourth resource and/or the fourth time are/is equal to a resource and/or time corresponding to a time domain resource obtained by multiplying the third resource by a preset proportion.

The idle time domain resource is a time domain resource other than a time domain resource used for data receiving and sending and physical downlink control channel monitoring and a time domain resource corresponding to time T, where T includes inherent processing time and frequency switching time of the terminal device.

In addition, for another optional implementation of the communication apparatus in this aspect, refer to related content of the fourth aspect. Details are not described herein again.

In still another implementation, the communication apparatus includes the processing unit and the communication unit. The communication unit is configured to

The processing unit is configured to: when an interval between two adjacent reference signals in a resource and/or time used to perform inter-frequency measurement is greater than or equal to a third threshold, or when an interval between two adjacent idle time domain resources in the resource and/or time used to perform the inter-frequency measurement is greater than or equal to the third threshold, determine to restart the inter-frequency measurement.

The processing unit is further configured to redetermine, starting from a latter reference signal or a latter resource, a resource and/or time used to perform the inter-frequency measurement.

In addition, for another optional implementation of the communication apparatus in this aspect, refer to related content of the fifth aspect. Details are not described herein again.

In still another implementation, the communication apparatus includes the processing unit and the communication unit. The communication unit is configured to receive and send data/signaling.

The processing unit is configured to: when an interval between two adjacent reference signals in a resource and/or time used by the terminal device to perform inter-frequency measurement is greater than or equal to a third threshold, or when an interval between two adjacent idle time domain resources in the resource and/or time used by the terminal device to perform the inter-frequency measurement is greater than or equal to the third threshold, determine that the terminal device restarts the inter-frequency measurement.

The processing unit is further configured to redetermine, starting from a latter reference signal or a latter resource, a resource and/or time used by the terminal device to perform the inter-frequency measurement.

In addition, for another optional implementation of the communication apparatus in this aspect, refer to related content of the sixth aspect. Details are not described herein again.

For example, the communication unit may be a transceiver or a communication interface, the storage unit may be a memory, and the processing unit may be a processor.

In an implementation, the communication apparatus includes the processor and the transceiver. The transceiver is configured to receive and send data/signaling.

The processor is configured to: when a length of each idle time domain resource is greater than or equal to a first threshold, or when a cycle of discontinuous reception configured by a network device is greater than or equal to a second threshold, use a part of the idle time domain resource as a first resource that is in the idle time domain resource and that can be used to perform inter-frequency measurement.

The processor is further configured to determine, based on the first resource in each idle time domain resource, a resource and/or time used to perform the inter-frequency measurement.

The idle time domain resource is a time domain resource other than a time domain resource used for data receiving and sending and physical downlink control channel monitoring and a time domain resource corresponding to time T, where T includes inherent processing time and frequency switching time of the terminal device.

In addition, for another optional implementation of the communication apparatus in this aspect, refer to related content of the first aspect. Details are not described herein again.

In another implementation, the communication apparatus includes the processor and the transceiver. The transceiver is configured to receive and send data/signaling.

The processor is configured to determine, based on each idle time domain resource and a quantity of reference signals or measurement time needed to perform inter-frequency measurement, a third resource needed to perform the inter-frequency measurement.

The processor is further configured to: when one or more idle time domain resources whose lengths are greater than or equal to a first threshold exist in the third resource, or when a cycle of discontinuous reception configured by a network device is greater than or equal to a second threshold, determine a fourth resource and/or fourth time needed to perform the inter-frequency measurement, where the fourth resource and/or the fourth time are/is equal to a resource and/or time corresponding to a time domain resource obtained by multiplying the third resource by a preset proportion.

The idle time domain resource is a time domain resource other than a time domain resource used for data receiving and sending and physical downlink control channel monitoring and a time domain resource corresponding to time T, where T includes inherent processing time and frequency switching time of the terminal device.

In addition, for another optional implementation of the communication apparatus in this aspect, refer to related content of the second aspect. Details are not described herein again.

In still another implementation, the communication apparatus includes the processor and the transceiver. The transceiver is configured to receive and send data/signaling.

The processor is configured to: for each idle time domain resource of the terminal device, when a length of the idle time domain resource is greater than or equal to a first threshold, or when a cycle of discontinuous reception configured by a network device is greater than or equal to a second threshold, use a part of the idle time domain resource as a first resource that is in the idle time domain resource and that can be used by the terminal device to perform inter-frequency measurement.

The processor is further configured to determine, based on the first resource in each idle time domain resource, a resource and/or time used by the terminal device to perform the inter-frequency measurement.

The idle time domain resource is a time domain resource other than a time domain resource used for data receiving and sending and physical downlink control channel monitoring and a time domain resource corresponding to time T, where T includes inherent processing time and frequency switching time of the terminal device.

In addition, for another optional implementation of the communication apparatus in this aspect, refer to related content of the third aspect. Details are not described herein again.

In still another implementation, the communication apparatus includes the processor and the transceiver. The transceiver is configured to receive and send data/signaling.

The processor is configured to determine, based on each idle time domain resource of the terminal device and a quantity of reference signals or measurement time needed by the terminal device to perform inter-frequency measurement, a third resource needed by the terminal device to perform the inter-frequency measurement.

The processor is further configured to: when one or more idle time domain resources whose lengths are greater than or equal to a first threshold exist in the third resource, or when a cycle of discontinuous reception configured by a network device is greater than or equal to a second threshold, determine a fourth resource and/or fourth time needed by the terminal device to perform the inter-frequency measurement, where the fourth resource and/or the fourth time are/is equal to a resource and/or time corresponding to a time domain resource obtained by multiplying the third resource by a preset proportion.

The idle time domain resource is a time domain resource other than a time domain resource used for data receiving and sending and physical downlink control channel monitoring and a time domain resource corresponding to time T, where T includes inherent processing time and frequency switching time of the terminal device.

In addition, for another optional implementation of the communication apparatus in this aspect, refer to related content of the fourth aspect. Details are not described herein again.

In still another implementation, the communication apparatus includes the processor and the transceiver. The transceiver is configured to receive and send data/signaling.

The processor is configured to: when an interval between two adjacent reference signals in a resource and/or time used to perform inter-frequency measurement is greater than or equal to a third threshold, or when an interval between two adjacent idle time domain resources in the resource and/or time used to perform the inter-frequency measurement is greater than or equal to the third threshold, determine to restart the inter-frequency measurement.

The processor is further configured to re-determine, starting from a latter reference signal or a latter resource, a resource and/or time used to perform the inter-frequency measurement.

In addition, for another optional implementation of the communication apparatus in this aspect, refer to related content of the fifth aspect. Details are not described herein again.

In still another implementation, the communication apparatus includes the processor and the transceiver. The transceiver is configured to receive and send data/signaling.

The processor is configured to: when an interval between two adjacent reference signals in a resource and/or time used by the terminal device to perform inter-frequency measurement is greater than or equal to a third threshold, or when an interval between two adjacent idle time domain resources in the resource and/or time used by the terminal device to perform the inter-frequency measurement is greater than or equal to the third threshold, determine that the terminal device restarts the inter-frequency measurement.

The processor is further configured to re-determine, starting from a latter reference signal or a latter resource, a resource and/or time used by the terminal device to perform the inter-frequency measurement.

In addition, for another optional implementation of the communication apparatus in this aspect, refer to related content of the sixth aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, more components may be integrated on a same chip. For example, the digital baseband processor and a plurality of application processors (for example, but not limited to, a graphics processing unit and a multimedia processor) may be integrated on a same chip. Such a chip may be referred to as a system-on-a-chip (System-on-a-Chip, SoC). Whether the components are independently disposed on different chips or are disposed on one or more chips in an integrated manner usually depends on a product design requirement. An implementation form of the foregoing components is not limited in embodiments of this application.

According to an eighth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the input information, the transceiver receives the information, and inputs the information into the processor. Further, after the transceiver receives the information, other processing may need to be performed on the information before the information is input into the processor.

Operations such as sending and receiving related to the processor may be more generally understood as operations such as output, receiving, and input of the processor, instead of operations such as sending and receiving directly performed by a radio frequency circuit and an antenna, unless otherwise specified, or if the operations do not contradict an actual function or internal logic of the operations in related descriptions.

In an implementation process, the processor may be a processor specially configured to perform these methods, or a processor, for example, a general-purpose processor, that performs these methods by executing computer instructions in a memory. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a ninth aspect, this application further provides a communication system. The system includes at least one network device and at least one terminal device in the foregoing aspects. In another possible design, the system may further include the another device that is in the solutions provided in this application and that interacts with the network device and the terminal device.

According to a tenth aspect, this application provides a computer-readable storage medium, configured to store instructions. When the instructions are executed by a computer, the method according to any one of the first aspect to the sixth aspect is implemented.

According to an eleventh aspect, this application

tion further provides a computer program product including instructions. When the computer program product runs on a computer, the method according to any one of the first aspect to the sixth aspect is implemented.

According to a twelfth aspect, this application provides a chip system. The chip system includes a processor and an interface. The interface is configured to obtain a program or instructions. The processor is configured to invoke the program or the instructions to implement or support a terminal device in implementing a function in the first aspect, or is configured to invoke the program or the instructions to implement or support a terminal device in implementing a function in the second aspect, or is configured to invoke the program or the instructions to implement or support a network device in implementing a function in the third aspect, or is configured to invoke the program or the instructions to implement or support a network device in implementing a function in the fourth aspect, or is configured to invoke the program or the instructions to implement or support a terminal device in implementing a function in the fifth aspect, or is configured to invoke the program or the instructions to implement or support a network device in implementing a function in the sixth aspect. For example, the chip system is configured to determine or process at least one of the data and information in the foregoing method. In a possible design, the chip system further includes a memory. The memory is configured to store program instructions and data that are necessary for a terminal. The chip system may include a chip, or may include a chip and another discrete component.

**BRIEF DESCRIPTION OF DRAWINGS**

FIG. 1 is a diagram of a structure of a communication system according to an embodiment of this application;
FIG. 2 is a diagram of cell re-establishment according to an embodiment of this application;
FIG. 3 is a diagram of an idle time domain resource according to an embodiment of this application;
FIG. 4(a) is a diagram of another idle time domain resource according to an embodiment of this application;
FIG. 4(b) is a diagram of still another idle time domain resource according to an embodiment of this application;
FIG. 5 is a schematic flowchart of an inter-frequency measurement resource and/or time determining method according to an embodiment of this application;
FIG. 6 is a diagram of a time domain resource according to an embodiment of this application;
FIG. 7(a) is a diagram of another time domain resource according to an embodiment of this application;

FIG. 7(b) is a diagram of still another time domain resource according to an embodiment of this application;

FIG. 8(a) is a diagram of still another time domain resource according to an embodiment of this application;

FIG. 8(b) is a diagram of still another time domain resource according to an embodiment of this application;

FIG. 9 is a schematic flowchart of another inter-frequency measurement resource and/or time determining method according to an embodiment of this application;

FIG. 10(a) is a diagram of still another time domain resource according to an embodiment of this application;

FIG. 10(b) is a diagram of still another time domain resource according to an embodiment of this application;

FIG. 11 is a schematic flowchart of still another inter-frequency measurement resource and/or time determining method according to an embodiment of this application;

FIG. 12 is a schematic flowchart of still another inter-frequency measurement resource and/or time determining method according to an embodiment of this application;

FIG. 13 is a schematic flowchart of still another inter-frequency measurement resource and/or time determining method according to an embodiment of this application;

FIG. 14 is a schematic flowchart of still another inter-frequency measurement resource and/or time determining method according to an embodiment of this application;

FIG. 15 is a diagram of a structure of a communication apparatus according to an embodiment of this application;

FIG. 16 is a diagram of a structure of another communication apparatus according to an embodiment of this application; and

FIG. 17 is a diagram of a structure of a chip according to an embodiment of this application.

## DESCRIPTION OF EMBODIMENTS

The following clearly and completely describes the technical solutions in embodiments of this application with reference to the accompanying drawings in embodiments of this application.

To better understand an inter-frequency measurement resource and/or time determining method disclosed in embodiments of this application, a communication system to which embodiments of this application are applicable is described.

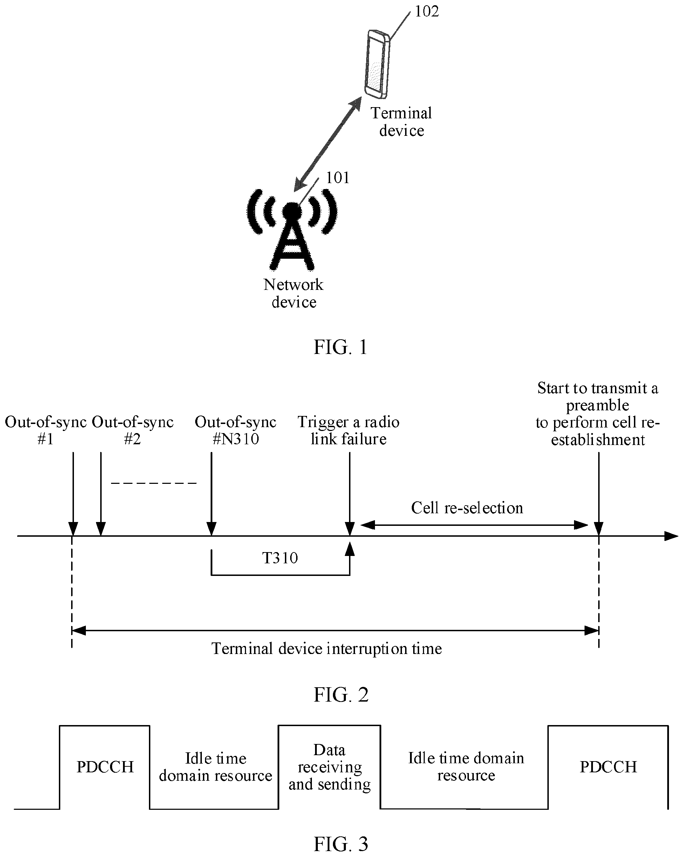

A system architecture provided in an embodiment of this application is shown in FIG. 1. The communication system may include but is not limited to one network device and one terminal device. A quantity of devices and forms of the devices shown in FIG. 1 are used as an example and do not constitute a limitation on this embodiment of this application. During actual application, at least one network device and at least one terminal device may be included. The communication system shown in FIG. 1 is described by using one network device 101 and one terminal device 102 as an example. The network device 101 may provide a network service for the terminal device 102.

It may be understood that the communication system mentioned in this embodiment of this application includes but is not limited to: a narrowband internet of things (narrowband internet of things, NB-IoT) system, a long term evolution (long term evolution, LTE) system, three application scenarios of a 5th generation (5th Generation, 5G) mobile communication system: enhanced mobile broadband (enhanced mobile broadband, eMBB), ultra-reliable low-latency communication (ultra-reliable low-latency communication, URLLC), and massive machine-type communication (massive machine-type of communication, mMTC), a wireless fidelity (wireless fidelity, Wi-Fi) system, a mobile communication system after 5G, or the like.

The network device in this embodiment of this application may include various forms of base stations, for example, a macro base station, a micro base station (also referred to as a small cell), a relay station (relay/repeater/smart repeater), an access point, a device that can implement a base station function in the future, an access node in a Wi-Fi system, a transmission reception point (transmitting and receiving point, TRP), a transmission point (transmitting point, TP), a mobile switching center, and a device that undertakes a base station function in device-to-device (Device-to-Device, D2D), vehicle-to-everything (vehicle-to-everything, V2X), and machine-to-machine (machine-to-machine, M2M) communication. Optionally, the network device or an access network device in this embodiment of this application may be a new radio eNB (new radio eNB), a TRP, a macro or micro base station, a high frequency base station, or an LTE macro or micro eNB. For example, the network device and the access network device in this embodiment of this application may respectively correspond to a base band unit (building base band unit, BBU) and a remote radio unit (remote radio unit, RRU). This is not specifically limited in this embodiment of this application.

The terminal device in this embodiment of this application may include various handheld devices, vehicle-mounted devices, wearable devices, or computing devices that have a wireless communication function, or other processing devices connected to a wireless modem. The terminal device may alternatively be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine-type communication (machine-type communication, MTC) terminal, a communication device on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

For ease of understanding of embodiments disclosed in this application, the following two points are described.

(1) In embodiments disclosed in this application, a scenario of a 5G new radio (new radio, NR) network in a wireless communication network is used as an example for description. It should be noted that solutions in embodiments disclosed in this application may be further applied to another wireless communication network, and a corresponding name may be replaced with a name of a corresponding function in the another wireless communication network.

(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In NB-IoT, after entering connected mode, a terminal device performs radio link monitoring (radio link monitoring, RLM) to measure signal quality of a current serving cell. As shown in FIG. 2, when the signal quality of the serving cell measured by the terminal device is lower than a threshold, the terminal device sends an out-of-sync signal to a protocol layer (for example, a radio resource control (radio resource control, RRC) layer) above a physical layer, and measures a signal instruction of the serving cell based on the out-of-sync signal. In other words, the terminal device determines, based on the out-of-sync signal, whether the signal quality of the serving cell deteriorates. After n310 consecutive out-of-sync signals are sent, the terminal device triggers a timer T310. When T310 expires, and the terminal device does not receive an instruction that is from a higher layer and that indicates that the signal quality of the serving cell is recovered, it indicates that the signal quality of the current serving cell is not recovered, and in this case, the terminal device triggers a radio link failure (radio link failure, RLF). Then, the terminal device disconnects from the serving cell, and enters an RRC re-establishment process, in other words, searches for another cell in the RRC re-establishment process, and attempts to access the another cell.

A period from a moment when the terminal device triggers the out-of-sync signal to a moment when the terminal device enters the RRC re-establishment process is long. Consequently, after the signal quality of the serving cell of the terminal device deteriorates, the terminal device needs to wait for long time before starting to search for another cell and access the another cell. Therefore, in Rel-17, the terminal device performs neighboring cell measurement in connected mode before triggering the RLF, and does not need to wait for the RLF before starting the neighboring cell measurement. In this way, the terminal device can obtain neighboring cell information before the RLF, and after entering the RRC re-establishment process, the terminal device can quickly complete the RRC re-establishment process, which saves time spent on cell search.

The neighboring cell measurement performed by the terminal device includes intra-frequency measurement and inter-frequency measurement. The intra-frequency measurement means that the terminal device measures a neighboring cell having a same frequency as that of the current serving cell, and the inter-frequency measurement means that the terminal device measures a neighboring cell having a different frequency from that of the current serving cell. When performing the intra-frequency measurement, the terminal device does not need to perform frequency switching. Therefore, when the terminal device performs the intra-frequency measurement, data receiving and sending of the serving cell are not affected. However, when performing the inter-frequency measurement, the terminal device needs to switch a frequency from a frequency of the serving cell to a target frequency. In this case, the terminal device may not be capable of normally receiving and sending data in the current serving cell. When performing the neighboring cell measurement in connected mode, a terminal device in NB-IoT needs to perform the inter-frequency measurement by using an idle time domain resource that does not affect data receiving and sending.

As shown in FIG. 3, the idle time domain resource may be a resource other than a time domain resource used for data receiving and sending and physical downlink control channel monitoring. However, when the idle time domain resource is long, because the terminal device performs the neighboring cell measurement at a different frequency for long time, synchronization performed by the terminal device with the serving cell may be inaccurate, and the terminal device needs to synchronize with the current serving cell in advance. Therefore, if the terminal device directly uses the idle time domain resource to perform the inter-frequency measurement, accuracy of data receiving and sending by the terminal device in the serving cell is affected. In addition, if the terminal device directly uses the idle time domain resource as a resource used to perform the inter-frequency measurement, the determined resource used to perform the inter-frequency measurement is too short, but a resource actually used by the terminal device to perform the inter-frequency measurement is too long, in other words, the determined resource used to perform the inter-frequency measurement is inaccurate.

In this embodiment of this application, the idle time domain resource is a time domain resource other than a time domain resource used for data receiving and sending and physical downlink control channel (physical downlink control channel, PDCCH) monitoring and a time domain resource corresponding to time T. T includes inherent processing time and frequency switching time of the terminal device, and T is a real number greater than or equal to 0. The inherent processing time of the terminal device may include signaling receiving time and the like. The time domain resource used for the PDCCH monitoring may be a time domain resource used for narrowband physical downlink control channel (narrowband physical downlink control channel, NPDCCH) monitoring. Optionally, when T is equal to 0, the idle time domain resource is a resource other than the time domain resource used for the data receiving and sending and the PDCCH monitoring.

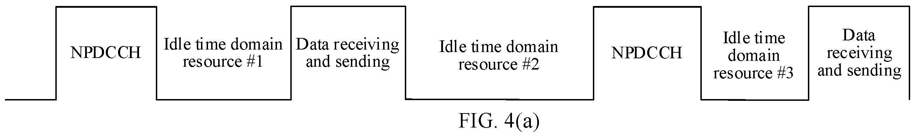

One idle time domain resource may be a span of consecutive idle time domain resources, or may be a resource including a plurality of non-consecutive idle slots. For example, as shown in FIG. 4(a), when a time domain resource is consecutive time domain resources, the idle time domain resource includes three idle time domain resources, namely, an idle time domain resource #1, an idle time domain resource #2, and an idle time domain resource #3, and each idle time domain resource includes a segment of consecutive idle time domain resources.

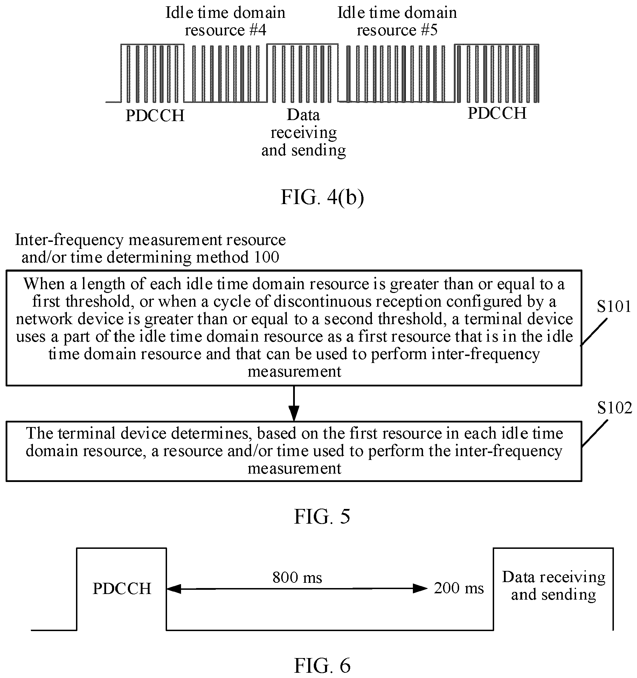

For example, as shown in FIG. 4(b), when a time domain resource is non-consecutive slots, the idle time domain resource includes two idle time domain resources, namely, an idle time domain resource #4 and an idle time domain resource #5, and each idle time domain resource includes a resource including a plurality of non-consecutive idle slots.

An embodiment of this application provides an inter-frequency measurement resource and/or time determining method 100. In the inter-frequency measurement resource and/or time determining method 100, when a length of each idle time domain resource is greater than or equal to a first threshold, or when a cycle of discontinuous reception configured by a network device is greater than or equal to a second threshold, a terminal device uses a part of the idle time domain resource as a first resource that is in the idle time domain resource and that can be used to perform inter-frequency measurement. The terminal device determines, based on the first resource in each idle time domain resource, a resource and/or time used to perform the inter-frequency measurement. The idle time domain resource is a time domain resource other than a time domain resource used for data receiving and sending and physical downlink control channel monitoring and a time domain resource corresponding to time T, where T includes inherent processing time and frequency switching time of the terminal device. T is a real number greater than or equal to 0.

When each idle time domain resource or the cycle of the discontinuous reception is long, the terminal device uses a part of the idle time domain resource as the first resource that can be used to perform the inter-frequency measurement, so that a resource needed for synchronization with a serving cell is reserved in the idle time domain resource, to synchronize with the serving cell. This helps improve accuracy of data receiving and sending.

An embodiment of this application further provides an inter-frequency measurement resource and/or time determining method 200. In the inter-frequency measurement resource and/or time determining method 200, a terminal device determines, based on each idle time domain resource and a quantity of reference signals or measurement time needed to perform inter-frequency measurement, a third resource needed to perform the inter-frequency measurement. When one or more idle time domain resources whose lengths are greater than or equal to a first threshold exist in the third resource, or when a cycle of discontinuous reception configured by a network device is greater than or equal to a second threshold, the terminal device determines a fourth resource and/or fourth time needed to perform the inter-frequency measurement. The fourth resource and/or the fourth time are/is equal to a resource and/or time corresponding to a time domain resource obtained by multiplying the third resource by a preset proportion. The idle time domain resource is a time domain resource other than a time domain resource used for data receiving and sending and physical downlink control channel monitoring and a time domain resource corresponding to time T, where T includes inherent processing time and frequency switching time of the terminal device.

The terminal device first determines, based on each idle time domain resource, the third resource needed by the terminal device to perform the inter-frequency measurement. Then, when one or more idle time domain resources whose lengths are greater than or equal to the first threshold exist in the third resource, or when the cycle of the discontinuous reception configured by the network device is greater than or equal to the second threshold, the terminal device extends the third resource by the preset proportion, to obtain the fourth resource and/or the fourth time needed to perform the inter-frequency measurement. In this way, the terminal device can reserve, from the third resource, a resource needed for synchronization with a serving cell, to synchronize with the serving cell. This helps improve accuracy of data receiving and sending.

An embodiment of this application further provides an inter-frequency measurement resource and/or time determining method 300. A difference from the inter-frequency measurement resource and/or time determining method 100 lies in that in the inter-frequency measurement resource and/or time determining method 300, it is a network device that determines a resource and/or time used by a terminal device to perform inter-frequency measurement, and a determining manner is the same as that in the inter-frequency measurement resource and/or time determining method 100.

Therefore, when each idle time domain resource of the terminal device or a cycle of discontinuous reception is long, the network device uses a part of the idle time domain resource as a first resource that can be used by the terminal device to perform the inter-frequency measurement, so that a resource needed by the terminal device to perform synchronization with a serving cell is reserved in the idle time domain resource, to enable the terminal device to synchronize with the serving cell. Therefore, the network device can accurately determine, based on the resource and/or the time used by the terminal device to perform the inter-frequency measurement, end time of the inter-frequency measurement performed by the terminal device. In this way, the network device can configure a proper signal threshold of the serving cell for the terminal device based on the end time of the inter-frequency measurement performed by the terminal device, to shorten time spent by the terminal device on cell re-establishment.

An embodiment of this application further provides an inter-frequency measurement resource and/or time determining method 400. A difference from the inter-frequency measurement resource and/or time determining method 200 lies in that in the inter-frequency measurement resource and/or time determining method 400, it is a network device that determines a fourth resource and/or fourth time needed by a terminal device to perform inter-frequency measurement, and a determining manner is the same as that in the inter-frequency measurement resource and/or time determining method 200.

Therefore, when one or more idle time domain resources whose lengths are greater than or equal to a first threshold exist in a third resource, or when a cycle of discontinuous reception configured by the network device is greater than or equal to a second threshold, the network device extends the third resource by a preset proportion, to obtain the fourth resource and/or the fourth time needed by the terminal device to perform the inter-frequency measurement. In this way, the network device can reserve, from the third resource, a resource needed by the terminal device to perform synchronization with a serving cell, to enable the terminal device to synchronize with the serving cell. Therefore, the network device can accurately determine, based on the fourth resource and/or the fourth time needed by the terminal device to perform the inter-frequency measurement, end time of the inter-frequency measurement performed by the terminal device. In this way, the network device can configure a proper signal threshold of the serving cell for the terminal device based on an end resource and/or the end time of the inter-frequency measurement performed by the terminal device, to shorten time spent by the terminal device on cell re-establishment.

An embodiment of this application further provides an inter-frequency measurement resource and/or time determining method 500. In the method, when an interval between two adjacent reference signals in a resource and/or time used to perform inter-frequency measurement is greater than or equal to a third threshold, or when an interval between two adjacent idle time domain resources in the resource and/or the time used to perform the inter-frequency measurement is greater than or equal to the third threshold, the terminal device determines to restart the inter-frequency measurement. The terminal device re-determines, starting from a latter reference signal or a latter resource, a resource and/or time used to perform the inter-frequency measurement. In this method, the terminal device can restart, by using the re-determined resource and/or time and starting from the latter reference signal or the latter resource, the inter-frequency measurement, to ensure real-time performance of a measurement result.

An embodiment of this application further provides an inter-frequency measurement resource and/or time determining method 600. When an interval between two adjacent reference signals in a resource and/or time used by a terminal device to perform inter-frequency measurement is greater than or equal to a third threshold, or when an interval between two adjacent idle time domain resources in the resource and/or the time used by the terminal device to perform the inter-frequency measurement is greater than or equal to the third threshold, a network device determines that the terminal device restarts the inter-frequency measurement. The network device re-determines, starting from a latter reference signal or a latter resource, a resource and/or time used by the terminal device to perform the inter-frequency measurement. In this method, the network device can accurately determine, based on the resource and/or the time used by the terminal device to perform the inter-frequency measurement, end time of the inter-frequency measurement performed by the terminal device.

An embodiment of this application provides an inter-frequency measurement resource and/or time determining method 100. FIG. 5 is a schematic flowchart of the inter-frequency measurement resource and/or time determining method 100. The inter-frequency measurement resource and/or time determining method 100 is described from a perspective of a terminal device. The inter-frequency measurement resource and/or time determining method 100 includes but is not limited to the following steps.

S101: When a length of each idle time domain resource is greater than or equal to a first threshold, or when a cycle of discontinuous reception configured by a network device is greater than or equal to a second threshold, the terminal device uses a part of the idle time domain resource as a first resource that is in the idle time domain resource and that can be used to perform inter-frequency measurement.

The first threshold and the second threshold may be configured by the network device for the terminal device, or may be predefined. This is not limited in this embodiment of this application. The idle time domain resource is described above, and details are not described again.

It may be understood that the terminal device determines, based on scheduling of the network device, a time domain resource used for data receiving and sending. Then, the terminal device determines one or more idle time domain resources based on the time domain resource used for data receiving and sending, the time domain resource that is configured by the network device and that is needed for PDCCH monitoring, and inherent processing time and frequency switching time of the terminal device.

When the length of each idle time domain resource is greater than or equal to the first threshold, or the cycle of the discontinuous reception configured by the network device is greater than or equal to the second threshold, it indicates that the terminal device may perform neighboring cell measurement on a different frequency for long time, and synchronization with a serving cell may be inaccurate. In this case, the terminal device needs to synchronize with the serving cell again. Therefore, the terminal device uses a part of the idle time domain resource as the first resource that is in the idle time domain resource and that can be used to perform the inter-frequency measurement, so that a resource needed for synchronization with the serving cell is reserved in the idle time domain resource, to synchronize with the serving cell. In this way, the terminal device may maintain synchronization with the serving cell before receiving and sending data, thereby improving accuracy of data receiving and sending. In addition, the first resource that is determined by the terminal device and that can be used to perform the inter-frequency measurement is accurate. This can ensure that the terminal device completes the inter-frequency measurement within the determined resource and/or time.

For example, a length of an idle time domain resource is 1500 ms, and the first threshold configured by the network device for the terminal device is 1000 ms. It can be learned that the length of the idle time domain resource is greater than the first threshold, and in this case, the terminal device uses a part of the idle time domain resource of 1500 ms as the first resource that is in the idle time domain resource and can be used to perform the inter-frequency measurement, to reserve, in the idle time domain resource, a time domain resource used for synchronization with the serving cell.

For example, the network device configures the discontinuous reception (discontinuous reception, DRX) for the terminal device, the cycle of the discontinuous reception is 2s, and the second threshold predefined by the terminal device and the network device is 1.28s. It can be learned that the cycle of the discontinuous reception is greater than the second threshold, the terminal device uses a part of each idle time domain resource as the first resource that is in the idle time domain resource and that can be used to perform the inter-frequency measurement, to reserve, in each idle time domain resource, a time domain resource used for synchronization with the serving cell.

In an optional implementation, a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

It can be learned that when the range that covers the length of the idle time domain resource changes or the range that covers the cycle of the discontinuous reception changes, a length of the second resource that is in the idle time domain resource and that is not used to perform the inter-frequency measurement changes. Therefore, a length of the first resource determined by the terminal device based on the idle time domain resource and the second resource also changes.

For example, as shown in FIG. 6, a length of an idle time domain resource is 1000 ms, and a time domain resource whose length is 200 ms is not used to perform the inter-frequency measurement. In this case, a time domain resource of (1000 to 200) ms in the idle time domain resource is a time domain resource used to perform the inter-frequency measurement. Optionally, a resource that is in the idle time domain resource and that is not used to perform the inter-frequency measurement is located at the end of the idle time domain resource, in other words, 200 ms before the idle time domain resource ends or 200 ms before a next moment needed for data receiving and sending or PDCCH monitoring is not used to perform the inter-frequency measurement.

For example, a length of an idle time domain resource is T, and the length of the second resource that is in the idle time domain resource and that is not used to perform the inter-frequency measurement is S. When 1000 ms < T < 2000 ms, S = 200 ms; when 2000 ms < T < 4000 ms, S = 400 ms; and when T < 1000 ms, S = 0, to be specific, when T < 1000 ms, the terminal device does not need to consider a resource used for synchronization with the serving cell, and the entire idle time domain resource can be used for neighboring cell measurement.

For example, S is the length of the second resource that is in an idle time domain resource and that is not used to perform the inter-frequency measurement. If the cycle of the discontinuous reception is greater than 1.28 seconds and less than 2.56 seconds, S = 200 ms. If the cycle of the discontinuous reception is less than 1.28 seconds, S = 100 ms.

In another optional implementation, a proportion of a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

It can be learned that when the range that covers the length of the idle time domain resource changes or the range that covers the cycle of the discontinuous reception changes, the proportion of the second resource that is in the idle time domain resource and that is not used to perform the inter-frequency measurement also changes. Therefore, a length of the first resource determined by the terminal device based on the idle time domain resource and the second resource also changes.

In other words, the terminal device may represent, by using a percentage, a time domain resource that is in each idle time domain resource and that is used to perform the inter-frequency measurement. For example, a length of an idle time domain resource is T, and a time domain resource whose proportion is P in T is a time domain resource that is in the idle time domain resource and that is not used to perform the inter-frequency measurement.

For example, a length of an idle time domain resource is 1000 ms, and a time domain resource whose proportion is 20% (1000 ms * 20% = 200 ms) in the idle time domain resource is not used to perform the inter-frequency measurement. Therefore, a time domain resource of 1000 ms to 200 ms in the idle time domain resource is the first resource that can be used to perform the inter-frequency measurement. Optionally, a resource that is in the idle time domain resource and that is not used to perform the inter-frequency measurement is located at the end of the idle time domain resource, in other words, a length of T*P before the idle time domain resource ends or a length of T*P before a next moment needed for data receiving and sending or PDCCH monitoring is not used to perform the inter-frequency measurement.

Optionally, the proportion of P is related to a length of an idle time domain resource. For example, when 1000 ms < T < 2000 ms, P = 10%; when 2000 ms < T < 4000 ms, P = 20%; and when T < 1000 ms, P = 0, to be specific, the terminal device does not need to consider a resource used for synchronization with the serving cell, and the entire idle time domain resource can be used for neighboring cell measurement. Optionally, P may also be determined based on the cycle of the discontinuous reception. For example, when the cycle of the discontinuous reception is greater than 1.28 seconds and less than 2.56 seconds, P = 20%; or when the cycle of the discontinuous reception is less than 1.28 seconds, P = 10%.

In an optional implementation, when the length of each idle time domain resource is less than the first threshold or the cycle of the discontinuous reception is less than the second threshold, the terminal device determines all of the idle time domain resource as the first resource that is in the idle time domain resource and that can be used to perform the inter-frequency measurement.

In other words, when the length of each idle time domain resource or the cycle of the discontinuous reception does not exceed a specific range, the terminal device still maintains synchronization with the serving cell, and does not need to perform synchronization with the serving cell in advance, and the terminal device does not need to reserve, in the idle time domain resource, a time domain resource for synchronization with the serving cell. Therefore, the terminal device uses all of the idle time domain resource as the first resource that can be used to perform the inter-frequency measurement, so that the terminal device fully uses all of the idle time domain resource to perform the inter-frequency measurement.

S 102: The terminal device determines, based on the first resource in each idle time domain resource, a resource and/or time used to perform the inter-frequency measurement.

When the resource length of the idle time domain resource is greater than or equal to the first threshold, or the cycle of the discontinuous reception configured by the network device is greater than or equal to the second threshold, the first resource of the idle time domain resource is a part of the idle time domain resource; or when the length of the idle time domain resource is less than the first threshold, or the cycle of the discontinuous reception configured by the network device is less than the second threshold, the first resource of the idle time domain resource is equal to the idle time domain resource.

In an optional implementation, that the terminal device determines, based on the first resource in each idle time domain resource, a resource and/or time used to perform the inter-frequency measurement includes: The terminal device determines, based on a quantity of reference signals needed to perform the inter-frequency measurement and a quantity of reference signals included in the first resource in each idle time domain resource, the resource and/or the time used to perform the inter-frequency measurement. Alternatively, the terminal device determines, based on measurement time needed to perform the inter-frequency measurement and the first resource in each idle time domain resource, the resource and/or the time used to perform the inter-frequency measurement.

It can be learned that the terminal device determines, from the first resource in each idle time domain resource based on the quantity of reference signals needed to perform the inter-frequency measurement or based on the measurement time needed to perform the inter-frequency measurement, the resource and/or the time actually needed to perform the inter-frequency measurement. The resource and/or the time actually needed by the terminal device to perform the inter-frequency measurement are/is determined by considering a resource and/or time that may be used by the terminal device to perform synchronization with the serving cell in advance. This enables the terminal device to complete the inter-frequency measurement while improving the accuracy of data receiving and sending.

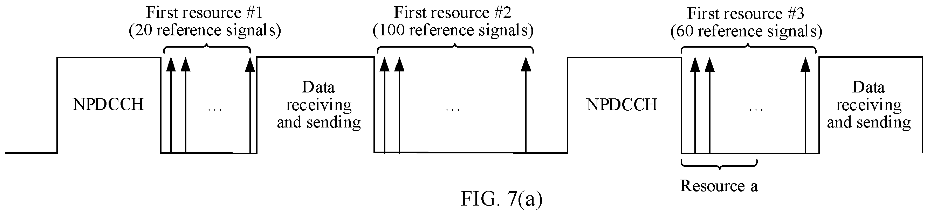

For example, as shown in FIG. 7(a), the first resource in each idle time domain resource includes 20 reference signals, 100 reference signals, and 60 reference signals, respectively, and the quantity of reference signals needed by the terminal device to perform the inter-frequency measurement is 150. In this case, the resource that is determined by the terminal device and that is used to perform the inter-frequency measurement includes a first resource #1, a first resource #2, and a resource a in a first resource #3.

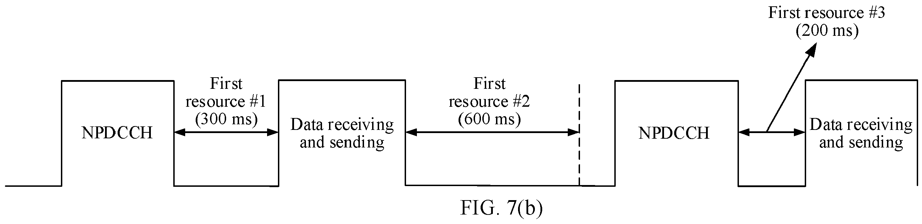

For example, as shown in FIG. 7(b), the first resource includes the first resource #1, the first resource #2, and the first resource #3, resource lengths of the first resource #1, the first resource #2, and the first resource #3 are 300 ms, 600 ms, and 200 ms, respectively, and the measurement time needed by the terminal device to perform the inter-frequency measurement is 1000 ms. In this case, the time that is determined by the terminal device and that is used to perform the inter-frequency measurement includes the first resource #1, the first resource #2, and a resource of the first 100 ms in the first resource #3.

In an optional implementation, when an interval between two adj acent reference signals in the resource and/or the time used to perform the inter-frequency measurement is greater than or equal to a third threshold, the terminal device determines to restart the inter-frequency measurement; or when an interval between two adjacent idle time domain resources in the resource and/or the time used to perform the inter-frequency measurement is greater than or equal to the third threshold, the terminal device determines to restart the inter-frequency measurement. The third threshold is configured by the network device, or is predefined. This is not limited in this embodiment of this application.

The restarting the inter-frequency measurement includes but is not limited to one or more of the following operations: discarding a previous measurement result, performing filtering without using the previous measurement result, recalculating a resource and/or time used to perform the inter-frequency measurement, or restarting the inter-frequency measurement of a neighboring cell.

The terminal device cannot store the previous measurement result for long time, or the previous measurement result lacks timeliness, in other words, the previous measurement result cannot be used. Therefore, when the interval between two adjacent reference signals in the resource and/or the time used to perform the inter-frequency measurement is greater than or equal to the third threshold, the terminal device determines to restart the inter-frequency measurement, and discards the previous measurement result, to ensure real-time performance of the measurement result; or when the interval between two adjacent idle time domain resources in the resource and/or the time used to perform the inter-frequency measurement is greater than or equal to the third threshold, the terminal device determines to restart the inter-frequency measurement, and discards the previous measurement result, to ensure the real-time performance of the measurement result.

In an optional implementation, after determining to restart the inter-frequency measurement, the terminal device recalculates, starting from a latter reference signal or a latter resource, a resource and/or time used to perform the inter-frequency measurement. Then, the terminal device restarts, by using the re-determined resource and/or time and starting from the latter reference signal or the latter resource, the inter-frequency measurement, to ensure the real-time performance of the measurement result.

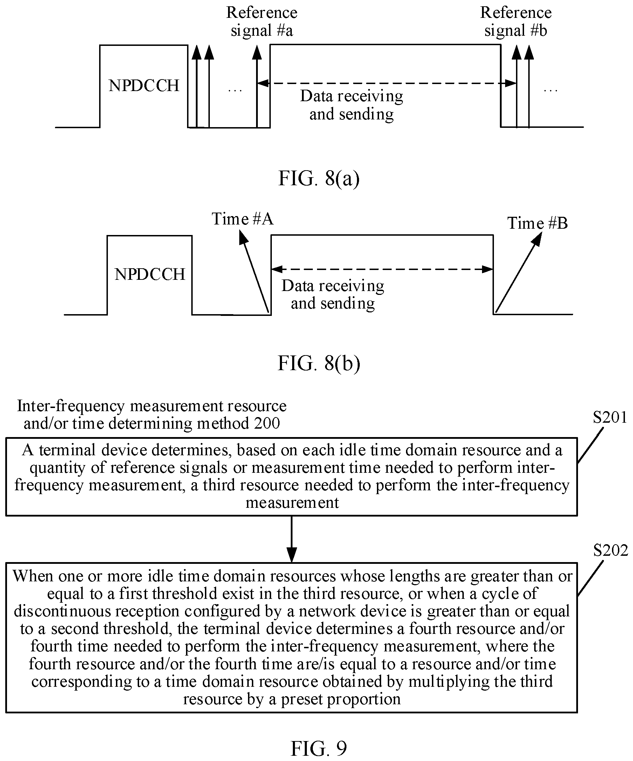

For example, as shown in FIG. 8(a), in a resource used by the terminal device to perform the inter-frequency measurement, if an interval between a reference signal #a and a reference signal #b is greater than the third threshold, the terminal device determines to restart the inter-frequency measurement at the reference signal #b, and discards a measurement result obtained by performing the inter-frequency measurement before the reference signal #a. Correspondingly, the terminal device recalculates, starting from a resource at the reference signal #b, the resource used to perform the inter-frequency measurement.

For example, as shown in FIG. 8(b), in time used by the terminal to perform the inter-frequency measurement, if an interval between time #A and time #B is greater than the third threshold, the terminal device determines to restart the inter-frequency measurement at the time #B, and discards a measurement result obtained by performing the inter-frequency measurement before the time #A. Correspondingly, the terminal device recalculates, starting from time at the time #B, the time used to perform the inter-frequency measurement.

In this embodiment of this application, when each idle time domain resource or the cycle of the discontinuous reception is long, the terminal device uses a part of the idle time domain resource as the first resource that can be used to perform the inter-frequency measurement, so that a resource needed for synchronization with the serving cell is reserved in the idle time domain resource, to synchronize with the serving cell. This helps improve the accuracy of data receiving and sending. In addition, in comparison with a manner in which the terminal device directly determines, based on each idle time domain resource, the resource and/or the time used to perform the inter-frequency measurement, in a manner in which the terminal device determines, based on the first resource in each idle time domain resource, the resource and/or the time used to perform the inter-frequency measurement, accuracy of the resource and/or the time used to perform the inter-frequency measurement can be improved, and it can be ensured that the terminal device completes the inter-frequency measurement within the determined resource and/or time.

An embodiment of this application further provides an inter-frequency measurement resource and/or time determining method 200. FIG. 9 is a schematic flowchart of the inter-frequency measurement resource and/or time determining method 200. The inter-frequency measurement resource and/or time determining method 200 is also described from a perspective of a terminal device. The inter-frequency measurement resource and/or time determining method 200 includes but is not limited to the following steps.

S201: The terminal device determines, based on each idle time domain resource and a quantity of reference signals or measurement time needed to perform inter-frequency measurement, a third resource needed to perform the inter-frequency measurement.

The idle time domain resource is described above, and details are not described again.

It may be understood that the terminal device determines, based on a quantity of reference signals included in each idle time domain resource and the quantity of reference signals needed to perform the inter-frequency measurement, the third resource needed to perform the inter-frequency measurement. A quantity of reference signals included in the third resource is equal to the quantity of reference signals needed by the terminal device to perform the inter-frequency measurement. Alternatively, the terminal device determines, based on a time length occupied by each idle time domain resource and the measurement time needed to perform the inter-frequency measurement, the third resource needed to perform the inter-frequency measurement. A time length occupied by the third resource is equal to the measurement time needed by the terminal device to perform the inter-frequency measurement.

For example, if the reference signals needed by the terminal device to perform the inter-frequency measurement include 40 reference signals, the third resource needed to perform the inter-frequency measurement is a resource occupied after intervals between the 40 reference signals in the idle time domain resource are summed. For example, if an interval between every two reference signals in the idle time domain resource is X.i, the third resource needed by the terminal device to perform the inter-frequency measurement is a resource occupied after $t = \sum_{i=1}^{39} X.i$ is obtained.

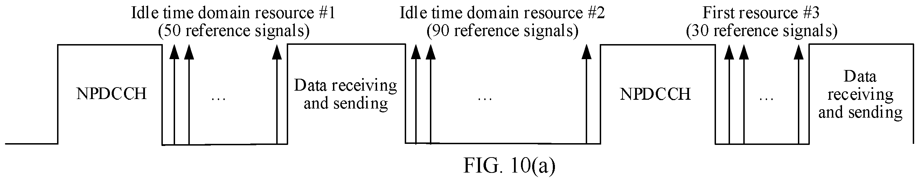

For example, as shown in FIG. 10(a), an idle time domain resource #1, an idle time domain resource #2, and an idle time domain resource #3 include 50 reference signals, 90 reference signals, and 30 reference signals, respectively, and the quantity of reference signals needed by the terminal device to perform the inter-frequency measurement is 150. In this case, the terminal device determines that the third resource needed to perform the inter-frequency measurement includes the idle time domain resource #1, the idle time domain resource #2, and time domain resources occupied by the first 10 reference signals in the idle time domain resource #3.

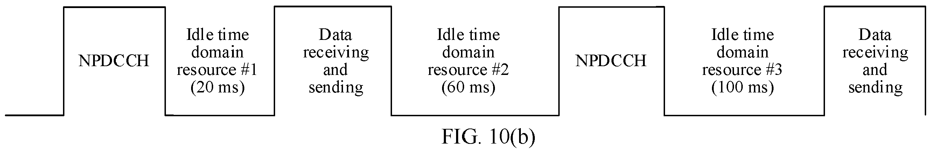

For example, as shown in FIG. 10(b), resource lengths of the idle time domain resource #1, the idle time domain resource #2, and the idle time domain resource #3 are 20 ms, 60 ms, and 100 ms, respectively, and time needed by the terminal device to perform the inter-frequency measurement is 150 ms. In this case, the terminal device determines that the third resource needed to perform the inter-frequency measurement includes the idle time domain resource #1, the idle time domain resource #2, and a time domain resource of the first 70 ms in the idle time domain resource #3.

S202: When one or more idle time domain resources whose lengths are greater than or equal to a first threshold exist in the third resource, or when a cycle of discontinuous reception configured by a network device is greater than or equal to a second threshold, the terminal device determines a fourth resource and/or fourth time needed to perform the inter-frequency measurement, where the fourth resource and/or the fourth time are/is equal to a resource and/or time corresponding to a time domain resource obtained by multiplying the third resource by a preset proportion.

The preset proportion may be configured by the network device, or may be predefined. This is not limited in this embodiment of this application.

It may be understood that, when one or more idle time domain resources whose lengths are greater than or equal to the first threshold exist in the third resource, or when the cycle of the discontinuous reception configured by the network device is greater than or equal to the second threshold, it indicates that the terminal device may perform neighboring cell measurement on a different frequency for long time, and the terminal device needs to switch the different frequency to a frequency of a serving cell in advance, to synchronize with the serving cell. Therefore, the terminal device needs to reserve, in the third resource, a resource used for synchronization with the serving cell, in other words, a part of the third resource is used for synchronization with the serving cell. In this case, the third resource is insufficient for the terminal device to perform the inter-frequency measurement. Therefore, the terminal device extends the third resource by the preset proportion, and determines the extended resource as the fourth resource and/or the fourth time actually needed to perform the inter-frequency measurement.

For example, if the first threshold is 1000 ms, and one or more idle time domain resources whose lengths are greater than 1000 ms exist in the third resource, it indicates that the terminal device needs to synchronize with the serving cell in the idle time domain resource whose length is greater than 1000 ms. Therefore, the terminal device determines that the fourth resource and/or the fourth time needed to perform the inter-frequency measurement are/is t * a, where t is time corresponding to the third resource. In other words, the terminal device determines the resource and/or the time corresponding to the resource obtained by extending the third resource as the resource and/or the time actually needed to perform the inter-frequency measurement. In this way, the terminal device can reserve, in the third resource, the resource and/or the time used for synchronization with the serving cell, to synchronize with the serving cell. This helps improve accuracy of data receiving and sending, and ensures that the terminal device completes the inter-frequency measurement within the determined resource and/or time.

In an optional implementation, when an interval between two adjacent reference signals in the fourth resource and/or the fourth time is greater than or equal to a third threshold, the terminal device determines to restart the inter-frequency measurement; or when an interval between two adjacent idle time domain resources in the fourth resource and/or the fourth time is greater than or equal to the third threshold, the terminal device determines to restart the inter-frequency measurement.

The terminal device cannot store a previous measurement result for long time, or the previous measurement result lacks timeliness, in other words, the previous measurement result cannot be used. Therefore, when the interval between two adjacent reference signals in the fourth resource and/or the fourth time is greater than or equal to the third threshold, the terminal device determines to restart the inter-frequency measurement, and discards the previous measurement result; or when the interval between two adjacent idle time domain resources in the fourth resource and/or the fourth time is greater than or equal to the third threshold, the terminal device determines to restart the inter-frequency measurement, and discards the previous measurement result. This implementation can ensure real-time performance of the measurement result.

In an optional implementation, after determining to restart the inter-frequency measurement, the terminal device recalculates, starting from a latter reference signal or a latter resource, a resource and/or time used to perform the inter-frequency measurement. Then, the terminal device restarts, by using the re-determined resource and/or time and starting from the latter reference signal or the latter resource, the inter-frequency measurement, to ensure the real-time performance of the measurement result.

It can be learned that when one or more idle time domain resources whose lengths are greater than or equal to the first threshold exist in the third resource needed to perform the inter-frequency resource, or when the cycle of the discontinuous reception configured by the network device is greater than or equal to the second threshold, the terminal device extends the third resource by the preset proportion, to obtain the fourth resource and/or the fourth time actually needed to perform the inter-frequency measurement. Therefore, the terminal device can reserve, in the third resource, a resource needed by the terminal device to perform synchronization with the serving cell, to synchronize with the serving cell. This helps improve the accuracy of data receiving and sending by the terminal device.

In addition, in comparison with a manner in which the terminal device directly determines, based on each idle time domain resource, the resource and/or the time needed to perform the inter-frequency measurement, in a manner in which the terminal device determines, by considering a resource that may be needed for synchronization with the serving cell and based on each idle time domain resource, the fourth resource and/or the fourth time actually needed by the terminal device to perform the inter-frequency measurement, accuracy of the resource and/or the time actually needed by the terminal device to perform the inter-frequency measurement can be improved.

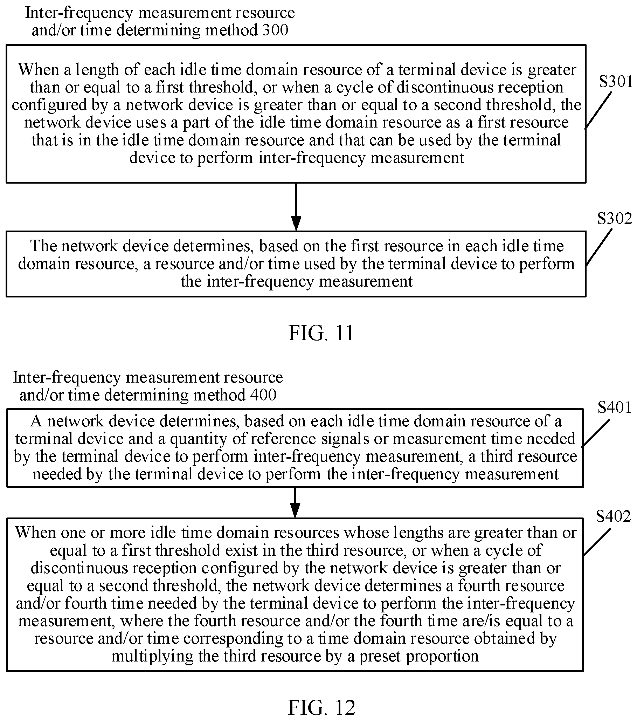

An embodiment of this application further provides an inter-frequency measurement resource and/or time determining method 300. FIG. 11 is a schematic flowchart of the inter-frequency measurement resource and/or time determining method 300. The inter-frequency measurement resource and/or time determining method 300 is described from a perspective of a network device. The inter-frequency measurement resource and/or time determining method 300 includes but is not limited to the following steps.

S301: For each idle time domain resource of a terminal device, when a length of the idle time domain resource is greater than or equal to a first threshold, or when a cycle of discontinuous reception configured by the network device is greater than or equal to a second threshold, the network device uses a part of the idle time domain resource as a first resource that is in the idle time domain resource and that can be used by the terminal device to perform inter-frequency measurement.

In an optional implementation, a second resource that is in the idle time domain resource and that is not used to perform the inter-frequency measurement is related to a range that covers the length of the idle time domain resource or a range that covers the cycle of the discontinuous reception. The first resource is a resource other than the second resource in the idle time domain resource.

In another optional implementation, a proportion of a second resource that is in the idle time domain resource and that is not used to perform the inter-frequency measurement is related to a range that covers the length of the idle time domain resource or a range that covers the cycle of the discontinuous reception. The first resource is a resource other than the second resource in the idle time domain resource.

For an implementation of the idle time domain resource, refer to the descriptions in the inter-frequency measurement resource and/or time determining method 100. Details are not described again.

An implementation in which the network device determines the first resource that is in the idle time domain resource and that can be used by the terminal device to perform the inter-frequency measurement is the same as the implementation, in the inter-frequency measurement resource and/or time determining method 100, in which the terminal device determines the first resource that is in the idle time domain resource and that can be used to perform the inter-frequency measurement. Details are not described again.

In an optional implementation, when the length of the idle time domain resource is less than the first threshold, or when the cycle of the discontinuous reception is less than the second threshold, the network device determines all of the idle time domain resource as the first resource that is in the idle time domain resource and that can be used by the terminal device to perform the inter-frequency measurement. For related descriptions of this implementation, refer to the descriptions of S 101 in the inter-frequency measurement resource and/or time determining method 100. Details are not described again.

S302: The network device determines, based on the first resource in each idle time domain resource, a resource and/or time used by the terminal device to perform the inter-frequency measurement.

In an optional implementation, that the network device determines, based on the first resource in each idle time domain resource, a resource and/or time used by the terminal device to perform the inter-frequency measurement includes: The network device determines, based on a quantity of reference signals needed by the terminal device to perform the inter-frequency measurement and a quantity of reference signals included in the first resource in each idle time domain resource, the resource and/or the time used by the terminal device to perform the inter-frequency measurement. Alternatively, the network device determines, based on measurement time needed by the terminal device to perform the inter-frequency measurement and the first resource in each idle time domain resource, the resource and/or the time used by the terminal device to perform the inter-frequency measurement.

An implementation in which the network device determines, based on the first resource in each idle time domain resource, the resource and/or the time used by the terminal device to perform the inter-frequency measurement is similar to the implementation in which the terminal device determines, based on the first resource in each idle time domain resource, the resource and/or the time used by the terminal device to perform the inter-frequency measurement. Details are not described again.

In an optional implementation, when an interval between two adjacent reference signals in the resource and/or the time used by the terminal device to perform the inter-frequency measurement is greater than or equal to a third threshold, the network device determines that the terminal device restarts the inter-frequency measurement; or when an interval between two adjacent idle time domain resources in the resource and/or the time used by the terminal device to perform the inter-frequency measurement is greater than or equal to the third threshold, the network device determines that the terminal device restarts the inter-frequency measurement.

In an optional implementation, after determining that the terminal device restarts the inter-frequency measurement, the network device recalculates, starting from a latter reference signal or a latter resource, a resource and/or time used by the terminal device to perform the inter-frequency measurement. Therefore, the network device accurately determines, based on the resource and/or the time that are/is used by the terminal device to perform the inter-frequency measurement and that are/is obtained through recalculation, end time of the inter-frequency measurement performed by the terminal device. In this way, the network device can more accurately configure a proper signal threshold of a serving cell for the terminal device, to shorten time spent by the terminal device on cell re-establishment.

For related descriptions of this implementation, refer to the descriptions of S 102 in the inter-frequency measurement resource and/or time determining method 100. Details are not described again.

An implementation in which the network device determines, based on the first resource in each idle time domain resource, the resource and/or the time used by the terminal device to perform the inter-frequency measurement is similar to the implementation, in the inter-frequency measurement resource and/or time determining method 100, in which the terminal device determines, based on the first resource in each idle time domain resource, the resource and/or the time used to perform the inter-frequency measurement. Details are not described again.

It may be understood that, after determining, based on the first resource in each idle time domain resource, the resource and/or the time used by the terminal device to perform the inter-frequency measurement, the network device may determine the end time of the inter-frequency measurement performed by the terminal device. Then, the network device configures the proper signal threshold of the serving cell for the terminal device based on the end time of the inter-frequency measurement performed by the terminal device. For example, when the network device determines that the end time of the inter-frequency measurement performed by the terminal device is early, it indicates that the terminal device can complete the inter-frequency measurement within a short resource or short time. In this case, the network device may configure the signal threshold of the serving cell to be a little lower, so that the terminal device can complete neighboring cell measurement in time even when signal quality of the serving cell is poor, and find a neighboring cell with good signal quality in time, to perform the cell re-establishment. When the network device determines that the end time of the inter-frequency measurement performed by the terminal device is late, it indicates that it needs to take long time for the terminal device to complete the inter-frequency measurement. In this case, the network device needs to configure the signal threshold of the serving cell to be a little higher, to ensure that the terminal device can complete neighboring cell measurement in time in a process in which signal quality of the serving cell deteriorates, and find a neighboring cell with good signal quality, to perform the cell re-establishment.

In this embodiment of this application, when each idle time domain resource of the terminal device or the cycle of the discontinuous reception is long, the network device uses a part of the idle time domain resource as the first resource that can be used to perform the inter-frequency measurement, so that the network device can reserve, from the idle time domain resource, a resource needed by the terminal device to perform synchronization with the serving cell, to enable the terminal device to synchronize with the serving cell. Therefore, the network device can accurately determine, based on the resource and/or the time used by the terminal device to perform the inter-frequency measurement, an end resource and/or the end time of the inter-frequency measurement performed by the terminal device. In this way, the network device can configure the proper signal threshold of the serving cell for the terminal device based on the end resource and/or the end time of the inter-frequency measurement performed by the terminal device, to shorten time spent by the terminal device on the cell re-establishment.

An embodiment of this application further provides an inter-frequency measurement resource and/or time determining method 400. FIG. 12 is a schematic flowchart of the inter-frequency measurement resource and/or time determining method 400. The inter-frequency measurement resource and/or time determining method 400 is also described from a perspective of a network device. The inter-frequency measurement resource and/or time determining method 400 includes but is not limited to the following steps.

S401: The network device determines, based on each idle time domain resource of a terminal device and a quantity of reference signals or measurement time needed by the terminal device to perform inter-frequency measurement, a third resource needed by the terminal device to perform the inter-frequency measurement.

This implementation is similar to the implementation in the inter-frequency measurement resource and/or time determining method 200, in which the terminal device determines, based on each idle time domain resource and the quantity of reference signals or the measurement time needed to perform the inter-frequency measurement, the third resource needed to perform the inter-frequency measurement. Details are not described again.

S402: When one or more idle time domain resources whose lengths are greater than or equal to a first threshold exist in the third resource, or when a cycle of discontinuous reception configured by the network device is greater than or equal to a second threshold, the network device determines a fourth resource and/or fourth time needed by the terminal device to perform the inter-frequency measurement, where the fourth resource and/or the fourth time are/is equal to a resource and/or time corresponding to a time domain resource obtained by multiplying the third resource by a preset proportion.

In an optional implementation, the preset proportion is related to a range that covers a length of a longest idle time domain resource in the third resource, or is related to a range that covers the cycle of the discontinuous reception. An implementation of the preset proportion is the same as the implementation of the preset proportion in the inter-frequency measurement resource and/or time determining method 200. Details are not described again.

In an optional implementation, when a length of each idle time domain resource in the third resource is less than the first threshold, or when the cycle of the discontinuous reception is less than the second threshold, the network device determines the third resource as the fourth resource and/or the fourth time.

In an optional implementation, when an interval between two adjacent reference signals in the fourth resource and/or the fourth time is greater than or equal to a third threshold, the network device determines that the terminal device restarts the inter-frequency measurement; or when an interval between two adjacent idle time domain resources in the fourth resource and/or the fourth time is greater than or equal to the third threshold, the network device determines that the terminal device restarts the inter-frequency measurement.

In an optional implementation, after determining that the terminal device restarts the inter-frequency measurement, the network device recalculates, starting from a latter reference signal or a latter resource, a resource and/or time used by the terminal device to perform the inter-frequency measurement. Therefore, the network device accurately determines, based on the resource and/or the time that are/is used by the terminal device to perform the inter-frequency measurement and that are/is obtained through recalculation, end time of the inter-frequency measurement performed by the terminal device. In this way, the network device can more accurately configure a proper signal threshold of a serving cell for the terminal device, to shorten time spent by the terminal device on cell re-establishment.

For the foregoing implementation, refer to the implementation in the inter-frequency measurement resource and/or time determining method 200. Details are not described again.

It may be understood that, after determining the fourth resource and/or the fourth time needed by the terminal device to perform the inter-frequency measurement, the network device may determine the end time of the inter-frequency measurement performed by the terminal device. Further, the network device configures the proper signal threshold of the serving cell for the terminal device based on the end time of the inter-frequency measurement performed by the terminal device. For an implementation in which the network device configures the signal threshold of the serving cell for the terminal device, refer to the implementation in the inter-frequency measurement resource and/or time determining method 300. Details are not described again.

In this embodiment of this application, the network device first determines, based on each idle time domain resource, the third resource needed by the terminal device to perform the inter-frequency measurement. Then, when one or more idle time domain resources whose lengths are greater than or equal to the first threshold exist in the third resource, or when the cycle of the discontinuous reception configured by the network device is greater than or equal to the second threshold, the network device extends the third resource by the preset proportion, to obtain the fourth resource and/or the fourth time needed to perform the inter-frequency measurement. Therefore, the network device can accurately determine, based on the fourth resource and/or the fourth time needed by the terminal device to perform the inter-frequency measurement, the end time of the inter-frequency measurement performed by the terminal device. In this way, the network device can configure the proper signal threshold of the serving cell for the terminal device based on the end time of the inter-frequency measurement performed by the terminal device, to shorten the time spent by the terminal device on the cell re-establishment.

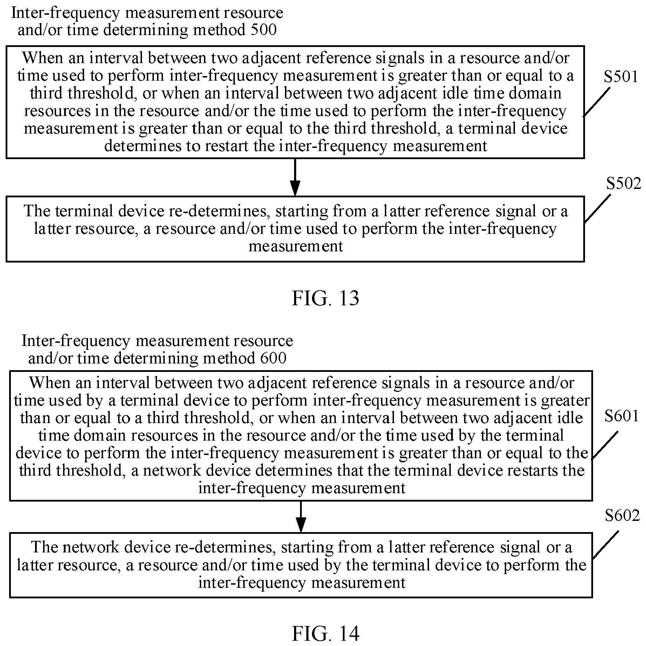

An embodiment of this application further provides an inter-frequency measurement resource and/or time determining method 500. FIG. 13 is a schematic flowchart of the inter-frequency measurement resource and/or time determining method 500. The inter-frequency measurement resource and/or time determining method 500 is described from a perspective of a terminal device. The inter-frequency measurement resource and/or time determining method 500 includes but is not limited to the following steps.

S501: When an interval between two adjacent reference signals in a resource and/or time used to perform inter-frequency measurement is greater than or equal to a third threshold, or when an interval between two adjacent idle time domain resources in the resource and/or the time used to perform the inter-frequency measurement is greater than or equal to the third threshold, the terminal device determines to restart the inter-frequency measurement.

The resource and/or the time used by the terminal device to perform the inter-frequency measurement may be determined by the terminal device based on each idle time domain resource. For an implementation of the idle time domain resource, refer to the foregoing descriptions. Details are not described again.

An implementation in which when the interval between two adjacent reference signals in the resource and/or the time used to perform the inter-frequency measurement is greater than or equal to the third threshold, the terminal device determines to restart the inter-frequency measurement is similar to the implementation in S 102 in the inter-frequency measurement resource and/or time determining method 100. Details are not described again.

S502: The terminal device re-determines, starting from a latter reference signal or a latter resource, a resource and/or time used to perform the inter-frequency measurement.

It may be understood that the terminal device re-determines, based on a quantity of reference signals included in each idle time domain resource after the latter reference signal in the two adjacent reference signals and a quantity of reference signals needed by the terminal device to perform the inter-frequency measurement, the resource and/or the time used to perform the inter-frequency measurement. Alternatively, the terminal device re-determines, starting from a resource corresponding to the latter resource in the two adjacent resources and based on a length of each idle time domain resource after the resource, and time needed by the terminal device to perform the inter-frequency measurement, the resource and/or the time used to perform the inter-frequency measurement.

In this embodiment of this application, when the interval between two adjacent reference signals in the resource and/or the time used to perform the inter-frequency measurement is greater than or equal to the third threshold, the terminal device determines to restart the inter-frequency measurement, and re-determines, starting from the latter reference signal or the latter resource, the resource and/or the time used to perform the inter-frequency measurement, to ensure accuracy of the resource and/or the time used to perform the inter-frequency measurement. In this way, the terminal device can restart, by using the re-determined resource and/or time and starting from the latter reference signal or the latter resource, the inter-frequency measurement, to ensure real-time performance of a measurement result.

An embodiment of this application further provides an inter-frequency measurement resource and/or time determining method 600. FIG. 14 is a schematic flowchart of the inter-frequency measurement resource and/or time determining method 600. The inter-frequency measurement resource and/or time determining method 600 is described from a perspective of a network device. The inter-frequency measurement resource and/or time determining method 600 includes but is not limited to the following steps.

S601: When an interval between two adjacent reference signals in a resource and/or time used by a terminal device to perform inter-frequency measurement is greater than or equal to a third threshold, or when an interval between two adjacent idle time domain resources in the resource and/or the time used by the terminal device to perform the inter-frequency measurement is greater than or equal to the third threshold, the network device determines that the terminal device restarts the inter-frequency measurement.

An implementation in which when the interval between two adjacent reference signals in the resource and/or the time used by the terminal device to perform the inter-frequency measurement is greater than or equal to the third threshold, the network device determines that the terminal device restarts the inter-frequency measurement is similar to the implementation in S102 in the inter-frequency measurement resource and/or time determining method 100. Details are not described again.

S602: The network device re-determines, starting from a latter reference signal or a latter resource, a resource and/or time used by the terminal device to perform the inter-frequency measurement.

An implementation in which the network device re-determines, starting from the latter reference signal or the latter resource, the resource and/or the time used by the terminal device to perform the inter-frequency measurement is similar to the implementation, in the inter-frequency measurement resource and/or time determining method 500, in which the terminal device re-determines, starting from the latter reference signal or the latter resource, the resource and/or the time used to perform the inter-frequency measurement. Details are not described again.

In this embodiment of this application, when the interval between two adjacent reference signals in the resource and/or the time used by the terminal device to perform the inter-frequency measurement is greater than or equal to the third threshold, the network device determines that the terminal device restarts the inter-frequency measurement, and re-determines, starting from the latter reference signal or the latter resource, the resource and/or the time used by the terminal device to perform the inter-frequency measurement, to ensure accuracy of the resource and/or the time used by the terminal device to perform the inter-frequency measurement. Therefore, the network device can accurately determine, based on the resource and/or the time used by the terminal device to perform the inter-frequency measurement, end time of the inter-frequency measurement performed by the terminal device. In this way, the network device can configure a proper signal threshold of a serving cell for the terminal device based on the end resource time of the inter-frequency measurement performed by the terminal device, to shorten time spent by the terminal device on cell re-establishment.

To implement functions in the method provided in embodiments of this application, the terminal device or the network device may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

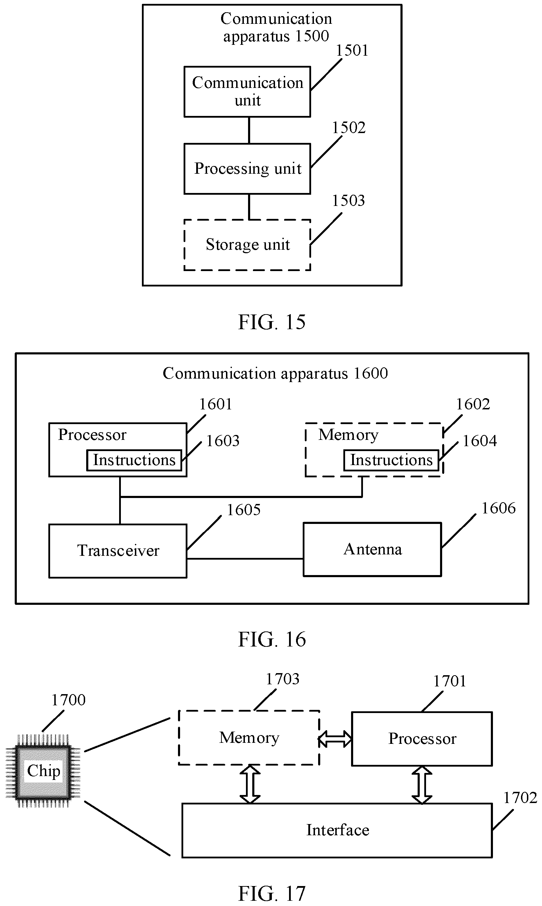

As shown in FIG. 15, an embodiment of this application provides a communication apparatus 1500. The communication apparatus 1500 may be a component (for example, an integrated circuit or a chip) of a terminal device, or may be a component (for example, an integrated circuit or a chip) of a network device. Alternatively, the communication apparatus 1500 may be another communication unit, configured to implement the method in method embodiments of this application. The communication apparatus 1500 may include a communication unit 1501 and a processing unit 1502. Optionally, the communication apparatus 1500 may further include a storage unit 1503.

In a possible design, one or more units in FIG. 15 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The communication apparatus 1500 has a function of implementing the terminal device described in embodiments of this application. Optionally, the communication apparatus 1500 has a function of implementing the network device described in embodiments of this application. For example, the communication apparatus 1500 includes a corresponding module, a unit, or a means (means) used for the terminal device to perform the steps that are related to the terminal device and that are described in embodiments of this application. The function, the unit, or the means (means) may be implemented by software or hardware, or may be implemented by hardware executing corresponding software, or may be implemented by a combination of software and hardware. For details, further refer to the corresponding descriptions in the foregoing corresponding method embodiment.

In a possible design, the communication apparatus 1500 may include the processing unit 1502 and the communication unit 1501. The communication unit 1501 is configured to receive and send data/signaling.

The processing unit 1502 is configured to: when a length of each idle time domain resource is greater than or equal to a first threshold, or when a cycle of discontinuous reception configured by the network device is greater than or equal to a second threshold, use a part of the idle time domain resource as a first resource that is in the idle time domain resource and that can be used to perform inter-frequency measurement.

The processing unit 1502 is further configured to determine, based on the first resource in each idle time domain resource, a resource and/or time used to perform the inter-frequency measurement.

The idle time domain resource is a time domain resource other than a time domain resource used for data receiving and sending and physical downlink control channel monitoring and a time domain resource corresponding to time T, where T includes inherent processing time and frequency switching time of the terminal device, and T is a real number greater than or equal to 0.

In an optional implementation, a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

In an optional implementation, a proportion of a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

In an optional implementation, the processing unit 1502 is further configured to: when the length of the idle time domain resource is less than the first threshold, or when the cycle of the discontinuous reception is less than the second threshold, determine all of the idle time domain resource as the first resource that is in the idle time domain resource and that can be used to perform the inter-frequency measurement.

In an optional implementation, when determining, based on the first resource in each idle time domain resource, the resource and/or the time used to perform the inter-frequency measurement, the processing unit 1502 is specifically configured to: determine, based on a quantity of reference signals needed to perform the inter-frequency measurement and a quantity of reference signals included in the first resource in each idle time domain resource, the resource and/or the time used to perform the inter-frequency measurement; or determine, based on measurement time needed to perform the inter-frequency measurement and the first resource in each idle time domain resource, the resource and/or the time used to perform the inter-frequency measurement.

In an optional implementation, when an interval between two adjacent reference signals in the resource and/or the time used to perform the inter-frequency measurement is greater than or equal to a third threshold, the processing unit 1502 may further determine to restart the inter-frequency measurement; or when an interval between two adjacent idle time domain resources in the resource and/or the time used to perform the inter-frequency measurement is greater than or equal to the third threshold, the processing unit 1502 determines to restart the inter-frequency measurement.

This embodiment of this application and the foregoing method embodiments are based on a same concept, and bring same technical effect. For a specific principle, refer to the descriptions of the foregoing embodiments. Details are not described again.

In another possible design, the communication apparatus 1500 may include the processing unit 1502 and the communication unit 1501. The communication unit 1501 is configured to receive and send data/signaling.

The processing unit 1502 is configured to determine, based on each idle time domain resource and a quantity of reference signals or measurement time needed to perform inter-frequency measurement, a third resource needed to perform the inter-frequency measurement.

The processing unit 1502 is further configured to: when one or more idle time domain resources whose lengths are greater than or equal to a first threshold exist in the third resource, or when a cycle of discontinuous reception configured by the network device is greater than or equal to a second threshold, determine a fourth resource and/or fourth time needed to perform the inter-frequency measurement, where the fourth resource and/or the fourth time are/is equal to a resource and/or time corresponding to a time domain resource obtained by multiplying the third resource by a preset proportion.

The idle time domain resource is a time domain resource other than a time domain resource used for data receiving and sending and physical downlink control channel monitoring and a time domain resource corresponding to time T, where T includes inherent processing time and frequency switching time of the terminal device, and T is a real number greater than or equal to 0.

In an optional implementation, the preset proportion is related to a range that covers a length of a longest idle time domain resource in the third resource, or is related to a range that covers the cycle of the discontinuous reception.

In an optional implementation, when a length of each idle time domain resource in the third resource is less than the first threshold, or when the cycle of the discontinuous reception is less than the second threshold, the processing unit 1502 may further determine the third resource as the fourth resource and/or the fourth time.

In another optional implementation, when an interval between two adjacent reference signals in the fourth resource and/or the fourth time is greater than or equal to a third threshold, the processing unit 1502 may further determine to restart the inter-frequency measurement; or when an interval between two adjacent idle time domain resources in the fourth resource and/or the fourth time is greater than or equal to the third threshold, the processing unit 1502 determines to restart the inter-frequency measurement.

This embodiment of this application and the foregoing method embodiments are based on a same concept, and bring same technical effect. For a specific principle, refer to the descriptions of the foregoing embodiments. Details are not described again.

In still another possible design, the communication apparatus 1500 may include the processing unit 1502 and the communication unit 1501. The communication unit 1501 is configured to receive and send data/signaling.

The processing unit 1502 is configured to: for each idle time domain resource of the terminal device, when a length of the idle time domain resource is greater than or equal to a first threshold, or when a cycle of discontinuous reception configured by the network device is greater than or equal to a second threshold, use a part of the idle time domain resource as a first resource that is in the idle time domain resource and that can be used by the terminal device to perform inter-frequency measurement.

The processing unit 1502 is further configured to determine, based on the first resource in each idle time domain resource, a resource and/or time used by the terminal device to perform the inter-frequency measurement.

The idle time domain resource is a time domain resource other than a time domain resource used for data receiving and sending and physical downlink control channel monitoring and a time domain resource corresponding to time T, where T includes inherent processing time and frequency switching time of the terminal device, and T is a real number greater than or equal to 0.

In an optional implementation, a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

In another optional implementation, a proportion of a second resource that is in the idle time domain resource and that is not used to perform the inter-frequency measurement is related to a range that covers the length of the idle time domain resource or a range that covers the cycle of the discontinuous reception, and the first resource is a resource other than the second resource in the idle time domain resource.

In an optional implementation, when the length of the idle time domain resource is less than the first threshold, or when the cycle of the discontinuous reception is less than the second threshold, the processing unit 1502 may further determine all of the idle time domain resource as the first resource that is in the idle time domain resource and that can be used by the terminal device to perform the inter-frequency measurement.

In an optional implementation, when determining, based on the first resource in each idle time domain resource, the resource and/or the time used by the terminal device to perform the inter-frequency measurement, the processing unit 1502 is specifically configured to: determine, based on a quantity of reference signals needed by the terminal device to perform the inter-frequency measurement and a quantity of reference signals included in the first resource in each idle time domain resource, the resource and/or the time used by the terminal device to perform the inter-frequency measurement; or determine, based on measurement time needed by the terminal device to perform the inter-frequency measurement and the first resource in each idle time domain resource, the resource and/or the time used by the terminal device to perform the inter-frequency measurement.

In an optional implementation, when an interval between two adjacent reference signals in the resource and/or the time used by the terminal device to perform the inter-frequency measurement is greater than or equal to a third threshold, the processing unit 1502 may further determine that the terminal device restarts the inter-frequency measurement; or when an interval between two adjacent idle time domain resources in the resource and/or the time used by the terminal device to perform the inter-frequency measurement is greater than or equal to the third threshold, the processing unit 1502 determines that the terminal device restarts the inter-frequency measurement.

This embodiment of this application and the foregoing method embodiments are based on a same concept, and bring same technical effect. For a specific principle, refer to the descriptions of the foregoing embodiments. Details are not described again.

In still another possible design, the communication apparatus 1500 may include the processing unit 1502 and the communication unit 1501. The communication unit 1501 is configured to receive and send data/signaling.

The processing unit 1502 is configured to determine, based on each idle time domain resource of the terminal device and a quantity of reference signals or measurement time needed by the terminal device to perform inter-frequency measurement, a third resource needed by the terminal device to perform the inter-frequency measurement.

The processing unit 1502 is further configured to: when one or more idle time domain resources whose lengths are greater than or equal to a first threshold exist in the third resource, or when a cycle of discontinuous reception configured by the network device is greater than or equal to a second threshold, determine a fourth resource and/or fourth time needed by the terminal device to perform the inter-frequency measurement, where the fourth resource and/or the fourth time are/is equal to a resource and/or time corresponding to a time domain resource obtained by multiplying the third resource by a preset proportion.

The idle time domain resource is a time domain resource other than a time domain resource used for data receiving and sending and physical downlink control channel monitoring and a time domain resource corresponding to time T, where T includes inherent processing time and frequency switching time of the terminal device, and T is a real number greater than or equal to 0.

In an optional implementation, the preset proportion is related to a range that covers a length of a longest idle time domain resource in the third resource, or is related to a range that covers the cycle of the discontinuous reception.

In an optional implementation, when a length of each idle time domain resource in the third resource is less than the first threshold, or when the cycle of the discontinuous reception is less than the second threshold, the processing unit 1502 may further determine the third resource as the fourth resource and/or the fourth time.

In an optional implementation, when an interval between two adj acent reference signals in the fourth resource and/or the fourth time is greater than or equal to a third threshold, the processing unit 1502 may further determine that the terminal device restarts the inter-frequency measurement; or when an interval between two adjacent idle time domain resources in the fourth resource and/or the fourth time is greater than or equal to the third threshold, the processing unit 1502 may further determine that the terminal device restarts the inter-frequency measurement.

This embodiment of this application and the foregoing method embodiments are based on a same concept, and bring same technical effect. For a specific principle, refer to the descriptions of the foregoing embodiments. Details are not described again.

In still another possible design, the communication apparatus 1500 may include the processing unit 1502 and the communication unit 1501. The communication unit 1501 is configured to receive and send data/signaling.

The processing unit 1502 is configured to: when an interval between two adjacent reference signals in a resource and/or time used to perform inter-frequency measurement is greater than or equal to a third threshold, or when an interval between two adjacent idle time domain resources in the resource and/or time used to perform the inter-frequency measurement is greater than or equal to the third threshold, determine to restart the inter-frequency measurement. The processing unit 1502 is further configured to re-determine, starting from a latter reference signal or a latter resource, a resource and/or time used to perform the inter-frequency measurement.

This embodiment of this application and the foregoing method embodiments are based on a same concept, and bring same technical effect. For a specific principle, refer to the descriptions of the foregoing embodiments. Details are not described again.

In still another possible design, the communication apparatus 1500 may include the processing unit 1502 and the communication unit 1501. The communication unit 1501 is configured to receive and send data/signaling.

The processing unit 1502 is configured to: when an interval between two adjacent reference signals in a resource and/or time used by the terminal device to perform inter-frequency measurement is greater than or equal to a third threshold, or when an interval between two adjacent idle time domain resources in the resource and/or time used by the terminal device to perform the inter-frequency measurement is greater than or equal to the third threshold, determine that the terminal device restarts the inter-frequency measurement. The processing unit 1502 is further configured to re-determine, starting from a latter reference signal or a latter resource, a resource and/or time used by the terminal device to perform the inter-frequency measurement.

This embodiment of this application and the foregoing method embodiments are based on a same concept, and bring same technical effect. For a specific principle, refer to the descriptions of the foregoing embodiments. Details are not described again.

An embodiment of this application further provides a communication apparatus 1600.

FIG. 16 is a diagram of a structure of the communication apparatus 1600. The communication apparatus 1600 may be a terminal device or a network device, may be a chip, a chip system, a processor, or the like that supports the terminal device in implementing the foregoing methods, or may be a chip, a chip system, a processor, or the like that supports the network device in implementing the foregoing methods. The apparatus may be configured to implement the methods described in the foregoing method embodiments. For details, refer to the descriptions in the foregoing method embodiments.

The communication apparatus 1600 may include one or more processors 1601. The processor 1601 may be a general-purpose processor, a dedicated processor, or the like. For example, the processor 1601 may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 1600 may include one or more memories 1602. The memory 1602 stores instructions 1604, and the instructions may be run on the processor 1601, to enable the communication apparatus 1600 to perform the methods described in the foregoing method embodiments. Optionally, the memory 1602 may further store data. The processor 1601 and the memory 1602 may be separately disposed, or may be integrated together.

The memory 1602 may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a portable read-only memory (Compact Disc Read-Only Memory, CD-ROM), or the like.

Optionally, the communication apparatus 1600 may further include a transceiver 1605 and an antenna 1606. The transceiver 1605 may be referred to as a transceiver unit, a transceiver machine, a transceiver circuit, or the like, and is configured to implement a transceiver function. The transceiver 1605 may include a receiver and a transmitter. The receiver may be referred to as a receiving machine, a receiving circuit, or the like, and is configured to implement a receiving function. The transmitter may be referred to as a transmitting machine, a transmitting circuit, or the like, and is configured to implement a transmitting function.

When the communication apparatus 1600 is a terminal device, the processor 1601 is configured to perform S101 and S102 in the inter-frequency measurement resource and/or time determining method 100, perform S201 and S202 in the inter-frequency measurement resource and/or time determining method 200, and perform S501 and S502 in the inter-frequency measurement resource and/or time determining method 500.

When the communication apparatus 1600 is a network device, the processor 1601 is configured to perform S301 and S302 in the inter-frequency measurement resource and/or time determining method 300, perform S401 and S402 in the inter-frequency measurement resource and/or time determining method 400, and perform S601 and S602 in the inter-frequency measurement resource and/or time determining method 600.

In another possible design, the processor 1601 may include a transceiver configured to implement receiving and transmitting functions. For example, the transceiver may be a transceiver circuit, an interface, or an interface circuit. The transceiver circuit, the interface, or the interface circuit configured to implement the receiving and transmitting functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1601 may store instructions 1603, and the instructions 1603 are run on the processor 1601, to enable the communication apparatus 1600 to perform the methods described in the foregoing method embodiments. The instructions 1603 may be fixed in the processor 1601, and in this case, the processor 1601 may be implemented by hardware.

In still another possible design, the communication apparatus 1600 may include a circuit. The circuit may implement a transmitting, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an n-channel metal oxide semiconductor (nMetal oxide semiconductor, NMOS), a p-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a terminal device or a network device. However, a scope of the communication apparatus described in embodiments of this application is not limited thereto, and a structure of the communication apparatus may not be limited by the structure in FIG. 16. The communication apparatus may be a stand-alone device or may be a part of a large device. For example, the communication apparatus may be:

> (1) a stand-alone integrated circuit IC, a chip, or a chip system or subsystem;
> (2) a set that has one or more ICs, where optionally, the IC set may alternatively include a storage component configured to store data and instructions;
> (3) an ASIC, for example, a modem (modulator);
> (4) a module that can be embedded in another device;
> (5) a receiver, a terminal, an intelligent terminal, a cellular phone, a wireless device, a handset, a mobile unit, a vehicle-mounted device, a network device, a cloud device, an artificial intelligence device, or the like; or
> (6) another device or the like.

For a case in which the communication apparatus may be a chip or a chip system, refer to a diagram of a structure of a chip shown in FIG. 17. A chip 1700 shown in FIG. 17 includes a processor 1701 and an interface 1702. There may be one or more processors 1701, and there may be a plurality of interfaces 1702. The processor 1701 may be a logic circuit, and the interface 1702 may be an input/output interface, an input interface, or an output interface. The chip 1700 may further include a memory 1703.

In a design, the chip is configured to implement a function of the terminal device in embodiments of this application. The interface 1702 is configured to perform output or receiving.

The processor 1701 is configured to: when a length of each idle time domain resource is greater than or equal to a first threshold, or when a cycle of discontinuous reception configured by a network device is greater than or equal to a second threshold, use a part of the idle time domain resource as a first resource that is in the idle time domain resource and that can be used to perform inter-frequency measurement. The processor 1701 is further configured to determine, based on the first resource in each idle time domain resource, a resource and/or time used to perform the inter-frequency measurement.

The idle time domain resource is a time domain resource other than a time domain resource used for data receiving and sending and physical downlink control channel monitoring and a time domain resource corresponding to time T, where T includes inherent processing time and frequency switching time of the terminal device, and T is a real number greater than or equal to 0.

In another design, the chip is configured to implement a function of the terminal device in embodiments of this application.

The processor 1701 is configured to determine, based on each idle time domain resource and a quantity of reference signals or measurement time needed to perform inter-frequency measurement, a third resource needed to perform the inter-frequency measurement. The processor 1701 is further configured to: when one or more idle time domain resources whose lengths are greater than or equal to a first threshold exist in the third resource, or when a cycle of discontinuous reception configured by a network device is greater than or equal to a second threshold, determine a fourth resource and/or fourth time needed to perform the inter-frequency measurement, where the fourth resource and/or the fourth time are/is equal to a resource and/or time corresponding to a time domain resource obtained by multiplying the third resource by a preset proportion.

The idle time domain resource is a time domain resource other than a time domain resource used for data receiving and sending and physical downlink control channel monitoring and a time domain resource corresponding to time T, where T includes inherent processing time and frequency switching time of the terminal device, and T is a real number greater than or equal to 0.

In still another design, the chip is configured to implement a function of the network device in embodiments of this application.

The processor 1701 is configured to: for each idle time domain resource of a terminal device, when a length of the idle time domain resource is greater than or equal to a first threshold, or when a cycle of discontinuous reception configured by the network device is greater than or equal to a second threshold, use a part of the idle time domain resource as a first resource that is in the idle time domain resource and that can be used by the terminal device to perform inter-frequency measurement. The processor 1701 is further configured to determine, based on the first resource in each idle time domain resource, a resource and/or time used by the terminal device to perform the inter-frequency measurement.

The idle time domain resource is a time domain resource other than a time domain resource used for data receiving and sending and physical downlink control channel monitoring and a time domain resource corresponding to time T, where T includes inherent processing time and frequency switching time of the terminal device, and T is a real number greater than or equal to 0.

In still another design, the chip is configured to implement a function of the network device in embodiments of this application.

The processor 1701 is configured to determine, based on each idle time domain resource of a terminal device and a quantity of reference signals or measurement time needed by the terminal device to perform inter-frequency measurement, a third resource needed by the terminal device to perform the inter-frequency measurement. The processor 1701 is further configured to: when one or more idle time domain resources whose lengths are greater than or equal to a first threshold exist in the third resource, or when a cycle of discontinuous reception configured by the network device is greater than or equal to a second threshold, determine a fourth resource and/or fourth time needed by the terminal device to perform the inter-frequency measurement, where the fourth resource and/or the fourth time are/is equal to a resource and/or time corresponding to a time domain resource obtained by multiplying the third resource by a preset proportion.

The idle time domain resource is a time domain resource other than a time domain resource used for data receiving and sending and physical downlink control channel monitoring and a time domain resource corresponding to time T, where T includes inherent processing time and frequency switching time of the terminal device, and T is a real number greater than or equal to 0.

In still another design, the chip is configured to implement a function of the terminal device in embodiments of this application.

The processor 1701 is configured to: when an interval between two adjacent reference signals in a resource and/or time used to perform inter-frequency measurement is greater than or equal to a third threshold, or when an interval between two adjacent idle time domain resources in the resource and/or time used to perform the inter-frequency measurement is greater than or equal to the third threshold, determine to restart the inter-frequency measurement. The processor 1701 is further configured to re-determine, starting from a latter reference signal or a latter resource, a resource and/or time used to perform the inter-frequency measurement.

In still another design, the chip is configured to implement a function of the terminal device in embodiments of this application.

The processor 1701 is configured to: when an interval between two adjacent reference signals in a resource and/or time used by the terminal device to perform inter-frequency measurement is greater than or equal to a third threshold, or when an interval between two adjacent idle time domain resources in the resource and/or time used by the terminal device to perform the inter-frequency measurement is greater than or equal to the third threshold, determine that the terminal device restarts the inter-frequency measurement. The processor 1701 is further configured to re-determine, starting from a latter reference signal or a latter resource, a resource and/or time used by the terminal device to perform the inter-frequency measurement.

In embodiments of this application, the communication apparatus 1600 and the chip 1700 may further perform the implementations of the foregoing communication apparatus 1500. A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the protection scope of embodiments of this application.

This embodiment of this application is based on a same concept as the method embodiments shown in the inter-frequency measurement resource and/or time determining method 100 to the inter-frequency measurement resource and/or time determining method 600, and brings same technical effect. For a specific principle, refer to the descriptions in the embodiments shown in the inter-frequency measurement resource and/or time determining method 100 to the inter-frequency measurement resource and/or time determining method 600. Details are not described again.

This application further provides a computer-readable storage medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

This application further provides a computer program. When the computer program is run on a computer, the function in any one of the foregoing method embodiments is implemented.

This application further provides a communication system. The system includes at least one terminal device and at least one network device in the foregoing aspects. In another possible design, the system may further include another device that is in the solutions provided in this application and that interacts with the terminal device and the network device.

The foregoing embodiments may be wholly or partially implemented by using software, hardware, firmware, or any combination thereof. When software is used to implement the embodiments, the embodiments may be wholly or partially implemented in a form of a computer program product. The computer program product includes one or more computer instructions. When the computer instructions are loaded and executed on the computer, the processes or functions according to embodiments of this application are wholly or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that, ordinal numerals such as "first" and "second" mentioned in embodiments of this application are used to distinguish between a plurality of objects, and are not intended to limit sizes, content, a sequence, a time sequence, priorities, importance, or the like of a plurality of objects.

It should be further understood that, in this application, both "when" and "if" mean that a network element performs corresponding processing in an objective situation, but do not constitute a limitation on time, do not require that the network element have a determining action during implementation, or do not mean other limitations.

It should be further understood that, in this application, "at least one" refers to one or more, and "a plurality of" refers to two or more. "At least one item (piece)" or a similar expression thereof means one or more items (pieces), in other words, any combination of these items, including any combination of singular items (pieces) or plural items (pieces). For example, at least one of a, b, or c represents a, b, c, a and b, a and c, b and c, or a, b, and c.

It should be further understood that, unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item may be applicable may also be obtained according to the foregoing rule.

It should be further understood that the term "and/or" in this specification describes only an association relationship between associated objects and indicates that three relationships may exist. For example, A and/or B may represent the following cases: Only A exists, both A and B exist, and only B exists. A and B may be singular or plural. The character "/" generally indicates an "or" relationship between the associated objects. For example, A/B indicates A or B.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An inter-frequency measurement resource and/or time determining method, wherein the method is applied to a terminal device, and the method comprises:

   when a length of an idle time domain resource of the terminal device is greater than or equal to a first threshold, or when a cycle of discontinuous reception configured by a network device is greater than or equal to a second threshold, using a part of the idle time domain resource as a first resource that is in the idle time domain resource and that can be used to perform inter-frequency measurement; and
   determining, based on the first resource, a resource and/or time used to perform the inter-frequency measurement, wherein
   the idle time domain resource comprises a time domain resource other than a time domain resource used for data receiving and sending and physical downlink control channel monitoring.

2. The method according to claim 1, wherein a second resource that is in the idle time domain resource and that is not used to perform the inter-frequency measurement is related to a range that covers a length of the idle time domain resource or a range that covers the cycle of the discontinuous reception; and
   the first resource is a resource other than the second resource in the idle time domain resource.

3. The method according to claim 1, wherein a proportion of a second resource that is in the idle time domain resource and that is not used to perform the inter-frequency measurement is related to a range that covers a length of the idle time domain resource or a range that covers the cycle of the discontinuous reception; and
   the first resource is a resource other than the second resource in the idle time domain resource.

4. The method according to any one of claims 1 to 3, wherein the method further comprises:
   when the length of the idle time domain resource is less than the first threshold, or when the cycle of the discontinuous reception is less than the second threshold, determining all of the idle time domain resource as the first resource that is in the idle time domain resource and that can be used to perform the inter-frequency measurement.

5. The method according to claim 4, wherein the determining, based on the first resource, a resource and/or time used to perform the inter-frequency measurement comprises:

determining, based on a quantity of reference signals needed to perform the inter-frequency measurement and a quantity of reference signals comprised in the first resource, the resource and/or the time used to perform the inter-frequency measurement; or

determining, based on measurement time needed to perform the inter-frequency measurement and the first resource, the resource and/or the time used to perform the inter-frequency measurement.

6.  The method according to any one of claims 1 to 5, wherein the method further comprises:

when an interval between two adjacent reference signals in the resource used to perform the inter-frequency measurement is greater than or equal to a third threshold, determining to restart the inter-frequency measurement; or

when an interval between two adjacent idle time domain resources in the resource used to perform the inter-frequency measurement is greater than or equal to the third threshold, determining to restart the inter-frequency measurement.

7.  The method according to claim 6, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

8.  An inter-frequency measurement resource and/or time determining method, wherein the method is applied to a terminal device, and the method comprises:

determining, based on an idle time domain resource of the terminal device and a quantity of reference signals or measurement time needed to perform inter-frequency measurement, a third resource needed to perform the inter-frequency measurement; and

when one or more idle time domain resources whose lengths are greater than or equal to a first threshold exist in the third resource, or when a cycle of discontinuous reception configured by a network device is greater than or equal to a second threshold, determining a fourth resource and/or fourth time needed to perform the inter-frequency measurement, wherein the fourth resource and/or the fourth time are/is equal to a resource and/or time corresponding to a time domain resource obtained by multiplying the third resource by a preset proportion, wherein the idle time domain resource comprises a time domain resource other than a time domain resource used for data receiving and sending and physical downlink control channel monitoring.

9.  The method according to claim 8, wherein the preset proportion is related to a range that covers a length of a longest idle time domain resource in the third resource, or is related to a range that covers the cycle of the discontinuous reception.

10.  The method according to claim 8 or 9, wherein the method further comprises:
when a length of each idle time domain resource in the third resource is less than the first threshold, or when the cycle of the discontinuous reception is less than the second threshold, determining the third resource as the fourth resource and/or the fourth time.

11.  The method according to any one of claims 8 to 10, wherein the method further comprises:

when an interval between two adjacent reference signals in the fourth resource is greater than or equal to a third threshold, determining to restart the inter-frequency measurement; or

when an interval between two adjacent idle time domain resources in the fourth resource is greater than or equal to the third threshold, determining to restart the inter-frequency measurement.

12.  The method according to claim 11, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

13.  An inter-frequency measurement resource and/or time determining method, wherein the method is applied to a network device, and the method comprises:

when a length of an idle time domain resource of a terminal device is greater than or equal to a first threshold, or when a cycle of discontinuous reception configured by the network device is greater than or equal to a second threshold, using a part of the idle time domain resource as a first resource that is in the idle time domain resource and that can be used by the terminal device to perform inter-frequency measurement; and

determining, based on the first resource, a resource and/or time used by the terminal device to perform the inter-frequency measurement, wherein

the idle time domain resource comprises a time domain resource other than a time domain resource used for data receiving and sending and physical downlink control channel monitoring.

14. The method according to claim 13, wherein a second resource that is in the idle time domain resource and that is not used to perform the inter-frequency measurement is related to a range that covers a length of the idle time domain resource or a range that covers the cycle of the discontinuous reception; and the first resource is a resource other than the second resource in the idle time domain resource.

15. The method according to claim 13, wherein a proportion of a second resource that is in the idle time domain resource and that is not used to perform the inter-frequency measurement is related to a range that covers a length of the idle time domain resource or a range that covers the cycle of the discontinuous reception; and the first resource is a resource other than the second resource in the idle time domain resource.

16. The method according to any one of claims 13 to 15, wherein the method further comprises: when the length of the idle time domain resource is less than the first threshold, or when the cycle of the discontinuous reception is less than the second threshold, determining all of the idle time domain resource as the first resource that is in the idle time domain resource and that can be used by the terminal device to perform the inter-frequency measurement.

17. The method according to claim 16, wherein the determining, based on the first resource, a resource and/or time used by the terminal device to perform the inter-frequency measurement comprises:

determining, based on a quantity of reference signals needed by the terminal device to perform the inter-frequency measurement and a quantity of reference signals comprised in the first resource, the resource and/or the time used by the terminal device to perform the inter-frequency measurement; or determining, based on measurement time needed by the terminal device to perform the inter-frequency measurement and the first resource, the resource and/or the time used by the terminal device to perform the inter-frequency measurement.

18. The method according to any one of claims 13 to 17, wherein the method further comprises:

when an interval between two adjacent reference signals in the resource used by the terminal device to perform the inter-frequency measurement is greater than or equal to a third threshold, determining that the terminal device restarts the inter-frequency measurement; or when an interval between two adjacent idle time domain resources in the resource used by the terminal device to perform the inter-frequency measurement is greater than or equal to the third threshold, determining that the terminal device restarts the inter-frequency measurement.

19. The method according to claim 18, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

20. An inter-frequency measurement resource and/or time determining method, wherein the method is applied to a network device, and the method comprises:

determining, based on an idle time domain resource of a terminal device and a quantity of reference signals or measurement time needed by the terminal device to perform inter-frequency measurement, a third resource needed by the terminal device to perform the inter-frequency measurement; and when one or more idle time domain resources whose lengths are greater than or equal to a first threshold exist in the third resource, or when a cycle of discontinuous reception configured by the network device is greater than or equal to a second threshold, determining a fourth resource and/or fourth time needed by the terminal device to perform the inter-frequency measurement, wherein the fourth resource and/or the fourth time are/is equal to a resource and/or time corresponding to a time domain resource obtained by multiplying the third resource by a preset proportion, wherein the idle time domain resource comprises a time domain resource other than a time domain resource used for data receiving and sending and physical downlink control channel monitoring.

21. The method according to claim 20, wherein the preset proportion is related to a range that covers a length of a longest idle time domain resource in the third resource, or is related to a range that covers the cycle of the discontinuous reception.

22. The method according to claim 20 or 21, wherein the method further comprises:
when a length of an idle time domain resource in the third resource is less than the first threshold, or when the cycle of the discontinuous reception is less than the second threshold, determining the third resource as the fourth resource and/or the fourth time.

23. The method according to any one of claims 20 to 22, wherein the method further comprises:

when an interval between two adjacent reference signals in the fourth resource is greater than or equal to a third threshold, determining that the terminal device restarts the inter-frequency measurement; or
when an interval between two adjacent idle time domain resources in the fourth resource is greater than or equal to the third threshold, determining that the terminal device restarts the inter-frequency measurement.

24. The method according to claim 23, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

25. An inter-frequency measurement resource determining method, wherein the method is applied to a terminal device, and the method comprises:

when an interval between two adjacent reference signals in a resource used to perform inter-frequency measurement is greater than or equal to a third threshold, or when an interval between two adjacent idle time domain resources in the resource used to perform the inter-frequency measurement is greater than or equal to the third threshold, determining to restart the inter-frequency measurement; and
determining, starting from a latter reference signal in the two adjacent reference signals or a latter resource in the two adjacent idle time domain resources, the resource used to perform the inter-frequency measurement.

26. The method according to claim 25, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

27. An inter-frequency measurement resource determining method, wherein the method is applied to a network device, and the method comprises:

when an interval between two adjacent reference signals in a resource used by a terminal device to perform inter-frequency measurement is greater than or equal to a third threshold, or when an interval between two adjacent idle time domain resources in the resource used by the terminal device to perform the inter-frequency measurement is greater than or equal to the third threshold, determining that the terminal device restarts the inter-frequency measurement; and
re-determining, starting from a latter reference signal in the two adjacent reference signals or a latter resource in the two adjacent idle time domain resources, a resource used by the terminal device to perform the inter-frequency measurement.

28. The method according to claim 27, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

29. A communication apparatus, wherein the apparatus is used in a terminal device, and the apparatus comprises:

a processing unit, configured to: when a length of an idle time domain resource of the terminal device is greater than or equal to a first threshold, or when a cycle of discontinuous reception configured by a network device is greater than or equal to a second threshold, use a part of the idle time domain resource as a first resource that is in the idle time domain resource and that can be used to perform inter-frequency measurement, wherein
the processing unit is further configured to determine, based on the first resource, a resource and/or time used to perform the inter-frequency measurement, wherein
the idle time domain resource comprises a time domain resource other than a time domain resource used for data receiving and sending and physical downlink control channel monitoring.

30. The apparatus according to claim 29, wherein a second resource that is in the idle time domain resource and that is not used to perform the inter-frequency measurement is related to a range that covers a length of the idle time domain resource or a range that covers the cycle of the discontinuous reception; and
the first resource is a resource other than the second resource in the idle time domain resource.

31. The apparatus according to claim 29, wherein a proportion of a second resource that is in the idle time domain resource and that is not used to perform the inter-frequency measurement is related to a range that covers a length of the idle time domain resource or a range that covers the cycle of the discontinuous reception; and
the first resource is a resource other than the second resource in the idle time domain resource.

32. The apparatus according to any one of claims 29 to 31, wherein the processing unit is further configured to:
when the length of the idle time domain resource is less than the first threshold, or when the cycle of the discontinuous reception is less than the second threshold, determine all of the idle time domain resource as the first resource that is in the idle time domain resource and that can be used to perform the inter-frequency measurement.

33. The apparatus according to claim 32, wherein when determining, based on the first resource, the resource and/or the time used to perform the inter-frequency measurement, the processing unit is specifically configured to:

determine, based on a quantity of reference signals needed to perform the inter-frequency measurement and a quantity of reference signals comprised in the first resource, the resource and/or the time used to perform the inter-frequency measurement; or
determine, based on measurement time needed to perform the inter-frequency measurement and the first resource, the resource and/or the time used to perform the inter-frequency measurement.

34. The apparatus according to any one of claims 29 to 33, wherein the processing unit is further configured to:

when an interval between two adjacent reference signals in the resource used to perform the inter-frequency measurement is greater than or equal to a third threshold, determine to restart the inter-frequency measurement; or
when an interval between two adjacent idle time domain resources in the resource used to perform the inter-frequency measurement is greater than or equal to the third threshold, determine to restart the inter-frequency measurement.

35. The apparatus according to claim 34, wherein the restarting the inter-frequency measurement comprises one or more of the following operations: discarding a measurement result obtained before the inter-frequency measurement is restarted, performing filtering without using the obtained measurement result, recalculating the resource and/or the time used to perform the inter-frequency measurement, or restarting the inter-frequency measurement of a neighboring cell.

36. A communication apparatus, wherein the apparatus is used in a terminal device, and the apparatus comprises:

a processing unit, configured to determine, based on an idle time domain resource of the terminal device and a quantity of reference signals or measurement time needed to perform inter-frequency measurement, a third resource needed to perform the inter-frequency measurement, wherein
the processing unit is further configured to: when one or more idle time domain resources whose lengths are greater than or equal to a first threshold exist in the third resource, or when a cycle of discontinuous reception configured by a network device is greater than or equal to a second threshold, determine a fourth resource and/or fourth time needed to perform the inter-frequency measurement, wherein the fourth resource and/or the fourth time are/is equal to a resource and/or time corresponding to a time domain resource obtained by multiplying the third resource by a preset proportion, wherein
the idle time domain resource comprises a time domain resource other than a time domain resource used for data receiving and sending and physical downlink control channel monitoring.

37. The apparatus according to claim 36, wherein the preset proportion is related to a range that covers a length of a longest idle time domain resource in the third resource, or is related to a range that covers the cycle of the discontinuous reception.

38. The apparatus according to claim 36 or 37, wherein the processing unit is further configured to:
when a length of each idle time domain resource in the third resource is less than the first threshold, or when the cycle of the discontinuous reception is less than the second threshold, determine the third resource as the fourth resource and/or the fourth time.

39. The apparatus according to any one of claims 36 to 38, wherein the processing unit is further configured to:

when an interval between two adjacent reference signals in the fourth resource is greater than or equal to a third threshold, determine to restart the inter-frequency measurement; or when an interval between two adjacent idle time domain resources in the fourth resource is greater than or equal to the third threshold, determine to restart the inter-frequency measurement.

40. The apparatus according to claim 39, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

41. A communication apparatus, wherein the apparatus is used in a network device, and the apparatus comprises:

a processing unit, configured to: when a length of an idle time domain resource of a terminal device is greater than or equal to a first threshold, or when a cycle of discontinuous reception configured by the apparatus is greater than or equal to a second threshold, use a part of the idle time domain resource as a first resource that is in the idle time domain resource and that can be used by the terminal device to perform inter-frequency measurement, wherein the processing unit is further configured to determine, based on the first resource, a resource and/or time used by the terminal device to perform the inter-frequency measurement, wherein the idle time domain resource comprises a time domain resource other than a time domain resource used for data receiving and sending and physical downlink control channel monitoring.

42. The apparatus according to claim 41, wherein a second resource that is in the idle time domain resource and that is not used to perform the inter-frequency measurement is related to a range that covers a length of the idle time domain resource or a range that covers the cycle of the discontinuous reception; and
the first resource is a resource other than the second resource in the idle time domain resource.

43. The apparatus according to claim 41, wherein a proportion of a second resource that is in the idle time domain resource and that is not used to perform the inter-frequency measurement is related to a range that covers a length of the idle time domain resource or a range that covers the cycle of the discontinuous reception; and
the first resource is a resource other than the second resource in the idle time domain resource.

44. The apparatus according to any one of claims 41 to 43, wherein the processing unit is further configured to:
when the length of the idle time domain resource is less than the first threshold, or when the cycle of the discontinuous reception is less than the second threshold, determine all of the idle time domain resource as the first resource that is in the idle time domain resource and that can be used by the terminal device to perform the inter-frequency measurement.

45. The apparatus according to claim 44, wherein when determining, based on the first resource, the resource and/or the time used by the terminal device to perform the inter-frequency measurement, the processing unit is specifically configured to:

determine, based on a quantity of reference signals needed by the terminal device to perform the inter-frequency measurement and a quantity of reference signals comprised in the first resource, the resource and/or the time used by the terminal device to perform the inter-frequency measurement; or
determine, based on measurement time needed by the terminal device to perform the inter-frequency measurement and the first resource, the resource and/or the time used by the terminal device to perform the inter-frequency measurement.

46. The apparatus according to any one of claims 41 to 45, wherein the processing unit is further configured to:

when an interval between two adjacent reference signals in the resource used by the terminal device to perform the inter-frequency measurement is greater than or equal to a third threshold, determine that the terminal device restarts the inter-frequency measurement; or when an interval between two adjacent idle time domain resources in the resource used by the terminal device to perform the inter-frequency measurement is greater than or equal to the third threshold, determine that the terminal device restarts the inter-frequency measurement.

47. The apparatus according to claim 46, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

48. A communication apparatus, wherein the apparatus is used in a network device, and the apparatus comprises:

a processing unit, configured to determine, based on an idle time domain resource of a terminal device and a quantity of reference signals or measurement time needed by the terminal device to perform inter-frequency measurement, a third resource needed by the terminal device to perform the inter-frequency measurement, wherein
the processing unit is further configured to: when one or more idle time domain resources whose lengths are greater than or equal to a first threshold exist in the third resource, or when a cycle of discontinuous reception configured by the apparatus is greater than or equal to a second threshold, determine a fourth resource and/or fourth time needed by the terminal device to perform the inter-frequency measurement, wherein the fourth resource and/or the fourth time are/is equal to a resource and/or time corresponding to a time domain resource obtained by multiplying the third resource by a preset proportion, wherein
the idle time domain resource comprises a time domain resource other than a time domain resource used for data receiving and sending and physical downlink control channel monitoring.

49. The apparatus according to claim 48, wherein the preset proportion is related to a range that covers a length of a longest idle time domain resource in the third resource, or is related to a range that covers the cycle of the discontinuous reception.

50. The apparatus according to claim 48 or 49, wherein the processing unit is further configured to:
when a length of each idle time domain resource in the third resource is less than the first threshold, or when the cycle of the discontinuous reception is less than the second threshold, determine the third resource as the fourth resource and/or the fourth time.

51. The apparatus according to any one of claims 48 to 50, wherein the processing unit is further configured to:

when an interval between two adjacent reference signals in the fourth resource is greater than or equal to a third threshold, determine that the terminal device restarts the inter-frequency measurement; or when an interval between two adjacent idle time domain resources in the fourth resource is greater than or equal to the third threshold, determine that the terminal device restarts the inter-frequency measurement.

52. The apparatus according to claim 51, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

53. A communication apparatus, wherein the apparatus is used in a terminal device, and the apparatus comprises:

a processing unit, configured to: when an interval between two adjacent reference signals in a resource used to perform inter-frequency measurement is greater than or equal to a third threshold, or when an interval between two adjacent idle time domain resources in the resource used to perform the inter-frequency measurement is greater than or equal to the third threshold, determine to restart the inter-frequency measurement, wherein
the processing unit is further configured to determine, starting from a latter reference signal in the two adjacent reference signals or a latter resource in the two adjacent idle time domain resources, the resource used to perform the inter-frequency measurement.

54. The apparatus according to claim 53, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

55. A communication apparatus, wherein the apparatus is used in a network device, and the apparatus comprises:

a processing unit, configured to: when an interval between two adjacent reference signals in a resource used by a terminal device to perform inter-frequency measurement is greater than or equal to a third threshold, or when an interval between two adjacent idle time domain resources in the resource used by the terminal device to perform the inter-frequency measurement is greater than or equal to the third threshold, determine that the terminal device restarts the inter-frequency measurement, wherein the processing unit is further configured to redetermine, starting from a latter reference signal in the two adjacent reference signals or a latter resource in the two adjacent idle time domain resources, a resource used by the terminal device to perform the inter-frequency measurement.

56. The apparatus according to claim 55, wherein the restarting the inter-frequency measurement comprises one or more of the following operations: discarding a measurement result obtained before the inter-frequency measurement is restarted, performing filtering without using the obtained measurement result, recalculating a resource and/or time used to perform the inter-frequency measurement, or restarting the inter-frequency measurement of a neighboring cell.

57. A communication apparatus, comprising a processor, wherein the processor is configured to run a program, to enable the communication apparatus to implement the method according to any one of claims 1 to 7, the method according to any one of claims 8 to 12, the method according to any one of claims 13 to 19, the method according to any one of claims 20 to 24, the method according to claim 25 or 26, or the method according to claim 27 or 28.

58. A computer-readable storage medium, wherein the computer-readable storage medium is configured to store instructions; and when the instructions are run on a computer, the method according to any one of claims 1 to 7, the method according to any one of claims 8 to 12, the method according to any one of claims 13 to 19, the method according to any one of claims 20 to 24, the method according to claim 25 or 26, or the method according to claim 27 or 28 is performed.

59. A computer program product comprising instructions, wherein when the computer program product runs on a computer, the method according to any one of claims 1 to 7, the method according to any one of claims 8 to 12, the method according to any one of claims 13 to 19, the method according to any one of claims 20 to 24, the method according to claim 25 or 26, or the method according to claim 27 or 28 is performed.

102

Terminal
device

101

Network
device

FIG. 1

Out-of-sync
#1

Out-of-sync
#2

Out-of-sync
#N310

Trigger a radio
link failure

Start to transmit a
preamble
to perform cell re-
establishment

Cell re-selection

T310

Terminal device interruption time

FIG. 2

| PDCCH | Idle time domain resource | Data receiving and sending | Idle time domain resource | PDCCH |

FIG. 3

| NPDCCH | Idle time domain resource #1 | Data receiving and sending | Idle time domain resource #2 | NPDCCH | Idle time domain resource #3 | Data receiving and sending |

FIG. 4(a)

41

Idle time domain
resource #4

Idle time domain
resource #5

PDCCH          Data            PDCCH
             receiving
             and sending

FIG. 4(b)

Inter-frequency measurement resource
and/or time determining method 100

When a length of each idle time domain resource is greater than or equal to a
first threshold, or when a cycle of discontinuous reception configured by a
network device is greater than or equal to a second threshold, a terminal device       S101
uses a part of the idle time domain resource as a first resource that is in the idle
time domain resource and that can be used to perform inter-frequency
measurement

The terminal device determines, based on the first resource in each idle time         S102
domain resource, a resource and/or time used to perform the inter-frequency
measurement

FIG. 5

PDCCH                800 ms                 200 ms      Data receiving
                                                          and sending

FIG. 6

First resource #1
(20 reference signals)

First resource #2
(100 reference signals)

First resource #3
(60 reference signals)

NPDCCH

...

Data
receiving
and sending

...

NPDCCH

...

Data
receiving
and sending

Resource a

FIG. 7(a)

FIG. 7(b)

Reference
signal #a

Reference
signal #b

NPDCCH
...
Data receiving
and sending
...

## FIG. 8(a)

Time #A

Time #B

NPDCCH
Data receiving
and sending

## FIG. 8(b)

Inter-frequency measurement resource
and/or time determining method 200

S201

A terminal device determines, based on each idle time domain resource and a quantity of reference signals or measurement time needed to perform inter-frequency measurement, a third resource needed to perform the inter-frequency measurement

S202

When one or more idle time domain resources whose lengths are greater than or equal to a first threshold exist in the third resource, or when a cycle of discontinuous reception configured by a network device is greater than or equal to a second threshold, the terminal device determines a fourth resource and/or fourth time needed to perform the inter-frequency measurement, where the fourth resource and/or the fourth time are/is equal to a resource and/or time corresponding to a time domain resource obtained by multiplying the third resource by a preset proportion

## FIG. 9

Idle time domain resource #1          Idle time domain resource #2          First resource #3
(50 reference signals)                (90 reference signals)                (30 reference signals)

NPDCCH                  ...    Data receiving          ...          NPDCCH          ...    Data
                               and sending                                                receiving
                                                                                           and sending

FIG. 10(a)

NPDCCH | Idle time domain resource #1 (20 ms) | Data receiving and sending | Idle time domain resource #2 (60 ms) | NPDCCH | Idle time domain resource #3 (100 ms) | Data receiving and sending

FIG. 10(b)

Inter-frequency measurement resource
and/or time determining method 300

When a length of each idle time domain resource of a terminal device is greater than or equal to a first threshold, or when a cycle of discontinuous reception configured by a network device is greater than or equal to a second threshold, the network device uses a part of the idle time domain resource as a first resource that is in the idle time domain resource and that can be used by the terminal device to perform inter-frequency measurement

S301

The network device determines, based on the first resource in each idle time domain resource, a resource and/or time used by the terminal device to perform the inter-frequency measurement

S302

FIG. 11

Inter-frequency measurement resource
and/or time determining method 400

A network device determines, based on each idle time domain resource of a terminal device and a quantity of reference signals or measurement time needed by the terminal device to perform inter-frequency measurement, a third resource needed by the terminal device to perform the inter-frequency measurement

S401

When one or more idle time domain resources whose lengths are greater than or equal to a first threshold exist in the third resource, or when a cycle of discontinuous reception configured by the network device is greater than or equal to a second threshold, the network device determines a fourth resource and/or fourth time needed by the terminal device to perform the inter-frequency measurement, where the fourth resource and/or the fourth time are/is equal to a resource and/or time corresponding to a time domain resource obtained by multiplying the third resource by a preset proportion

S402

FIG. 12

Inter-frequency measurement resource
and/or time determining method 500

| When an interval between two adjacent reference signals in a resource and/or time used to perform inter-frequency measurement is greater than or equal to a third threshold, or when an interval between two adjacent idle time domain resources in the resource and/or the time used to perform the inter-frequency measurement is greater than or equal to the third threshold, a terminal device determines to restart the inter-frequency measurement |
|---|

S501

S502

| The terminal device re-determines, starting from a latter reference signal or a latter resource, a resource and/or time used to perform the inter-frequency measurement |
|---|

FIG. 13

Inter-frequency measurement resource
and/or time determining method 600

| When an interval between two adjacent reference signals in a resource and/or time used by a terminal device to perform inter-frequency measurement is greater than or equal to a third threshold, or when an interval between two adjacent idle time domain resources in the resource and/or the time used by the terminal device to perform the inter-frequency measurement is greater than or equal to the third threshold, a network device determines that the terminal device restarts the inter-frequency measurement |
|---|

S601

S602

| The network device re-determines, starting from a latter reference signal or a latter resource, a resource and/or time used by the terminal device to perform the inter-frequency measurement |
|---|

FIG. 14

Communication
apparatus 1500

1501

Communication
unit

1502

Processing unit

1503

Storage unit

FIG. 15

Communication apparatus 1600

1601

Processor

1603

Instructions

1602

Memory

1604

Instructions

1605

Transceiver

1606

Antenna

FIG. 16

1700

Chip

1703

Memory

1701

Processor

1702

Interface

FIG. 17

**INTERNATIONAL SEARCH REPORT**

| International application No. |
|---|
| **PCT/CN2023/071219** |

**A. CLASSIFICATION OF SUBJECT MATTER**

H04W24/02(2009.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

3GPP, CNTXT, ENTXTC: 比例, 部分, 资源, 测量, 长度, 大于, 掉网, 掉线, 非连续接收, 间隔, 空闲, 全部, 时长, 选择, 异频, 异系统, 重启, 重新, 周期, scale, partial, resource, measurement, length, greater than, dropped, interval, idle, total, duration, select, inter-frequency, restart, period, DRX, GAP

**C. DOCUMENTS CONSIDERED TO BE RELEVANT**

| Category* | Citation of document, with indication, where appropriate, of the relevant passages | Relevant to claim No. |
|---|---|---|
| Y | CN 101128000 A (HUAWEI TECHNOLOGIES CO., LTD.) 20 February 2008 (2008-02-20) description, page 5, line 10 to page 10, line 7, and figure 2 | 1-24, 29-52 |
| Y | CN 109644437 A (HUAWEI TECHNOLOGIES CO., LTD.) 16 April 2019 (2019-04-16) description, paragraphs 3-7 | 1-24, 29-52 |
| X | CN 105991356 A (SIMPLIGHT NANOELECTRONICS LTD.) 05 October 2016 (2016-10-05) description, paragraphs [0072]-[0075] | 25-28, 53-59 |
| Y | CN 105991356 A (SIMPLIGHT NANOELECTRONICS LTD.) 05 October 2016 (2016-10-05) description, paragraphs [0072]-[0075] | 6-7, 11-12, 18-19, 23-24, 34-35, 39-40, 46-47, 51-52 |
| A | WO 2009038075 A1 (NTT DOCOMO INC. et al.) 26 March 2009 (2009-03-26) entire document | 1-59 |
| A | WO 2020164418 A1 (HUAWEI TECHNOLOGIES CO., LTD.) 20 August 2020 (2020-08-20) entire document | 1-59 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 March 2023** | **22 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/071219**

| Patent document cited in search report | | | Publication date (day/month/year) | Patent family member(s) | | | Publication date (day/month/year) |
|---|---|---|---|---|---|---|---|
| CN | 101128000 | A | 20 February 2008 | WO | 2008022603 | A1 | 28 February 2008 |
| CN | 109644437 | A | 16 April 2019 | JP | 2019527998 | A | 03 October 2019 |
| | | | | KR | 20190034287 | A | 01 April 2019 |
| | | | | EP | 3487237 | A1 | 22 May 2019 |
| | | | | WO | 2018027499 | A1 | 15 February 2018 |
| | | | | US | 2019173522 | A1 | 06 June 2019 |
| | | | | CN | 112543444 | A | 23 March 2021 |
| CN | 105991356 | A | 05 October 2016 | | None | | |
| WO | 2009038075 | A1 | 26 March 2009 | JP | 2009077287 | A | 09 April 2009 |
| WO | 2020164418 | A1 | 20 August 2020 | CN | 111565412 | A | 21 August 2020 |

Form PCT/ISA/210 (patent family annex) (July 2022)

**EP 4 451 728 A1**

**REFERENCES CITED IN THE DESCRIPTION**

**Patent documents cited in the description**

- CN 202210074775